# FASCICULE DE BREVET EUROPEEN

(11) **EP 2 948 514 B1**
(45) Date de publication et mention de la délivrance du brevet: **16.01.2019**
(21) Numéro de dépôt: 14701219.9
(22) Date de dépôt: 24.01.2014
(51) Int. Cl.: C09J 177/00, B32B 27/08, B32B 27/34, C08G 69/26, C08G 69/36, F16L 11/04, C08L 77/00, B32B 27/30, B32B 1/08

(54) **COMPOSITION ADHÉSIVE ET STRUCTURE COMPRENANT AU MOINS UNE COUCHE DE LADITE COMPOSITION**
KLEBSTOFFZUSAMMENSETZUNG UND STRUKTUR MINDESTENS EINER SCHICHT AUS DIESER ZUSAMMENSETZUNG
ADHESIVE COMPOSITION AND STRUCTURE COMPRISING AT LEAST ONE LAYER OF SAID COMPOSITION

(30) Priorité: 25.01.2013 FR 1350664
(43) Date de publication de la demande: 02.12.2015
(73) Titulaire: Arkema France, 92700 Colombes (FR)
(72) Inventeur: MONTANARI, Thibaut, F-27300 Menneval (FR); VERMOGEN, Alexandre, F-27170 Beaumont le Roger (FR); MONTEZIN, Fabrice, F-27230 Saint Aubin de Scellon (FR); FERREIRO, Vincent, F-63430 Pont du Château (FR)
(74) Mandataire: Casalonga
(86) Numéro de dépôt international: PCT/EP2014/051434
(87) Numéro de publication internationale: WO 2014/114766

(56) Documents cités:
- FR-A1- 2 974 028
- GB-A- 1 129 639

## Description

L'invention se rapporte à une composition adhésive, également appelée liant, son utilisation pour la réalisation de structures destinées au transfert et/ou au stockage de gaz et de fluides, tels que les carburants ou bio-carburants, l'air comprimé, des liquides de freinage ou de refroidissement.

L'invention porte plus particulièrement sur les tubes présents au sein d'un moteur. Ces tubes peuvent par exemple être destinés au transport de carburants, notamment du réservoir jusqu'au moteur, au circuit de refroidissement, au système hydraulique, ou encore destinés au circuit d'air conditionné ou comprimé ou le transport de mélange d'urée et d'eau. Ces tubes peuvent également entrer dans des applications sous-châssis.

Pour des raisons de sécurité et de préservation de l'environnement, notamment avec l'arrivée de nouveaux bio-carburants, les constructeurs automobiles imposent aux tubes précédemment cités des caractéristiques mécaniques particulières, ainsi que des caractéristiques de très faible perméabilité et de bonne tenue aux différents constituants des carburants, ceux-ci variant selon le pays (hydrocarbures, additifs, alcools comme le méthanol et l'éthanol, les alcools pouvant être des composants majoritaires dans certains cas), aux huiles de lubrification du moteur et aux autres produits chimiques susceptibles d'être rencontrés dans cet environnement (acide de batteries, liquides de frein, liquides de refroidissement, sels métalliques tels que le chlorure de calcium ou de zinc).

Les caractéristiques des cahiers des charges couramment requises par les constructeurs automobiles pour qu'un tube soit jugé satisfaisant sont cumulativement les suivantes :
- bonne et pérenne adhésion entre les couches, si le tube est un tube multicouche, tout particulièrement après avoir été exposé au carburant ;
- bonne intégrité des liaisons (tubes+raccords) après circulation du carburant, c'est-à-dire ne conduisant à aucune fuite ;
- bonne stabilité dimensionnelle du tube, lorsqu'il est utilisé avec de l'essence ;
- bonne tenue aux chocs à froid (de -30°C à -40°C environ), de manière à ce que le tube ne se brise pas ;
- bonne tenue à chaud (environ 150°C), de manière à ce que le tube ne se déforme pas ;
- bonne tenue au vieillissement en milieu oxydatif chaud (par exemple : air chaud du compartiment moteur, de 100 à 150°C environ) ;
- bonne tenue aux carburants et à leurs produits de dégradation et notamment avec de fortes teneurs en peroxyde ;
- très faible perméabilité aux carburants, et plus particulièrement de bonnes propriétés barrière aux bio-carburants, tant pour ses composants polaires (comme l'éthanol) que pour ses composants apolaires (hydrocarbures) ;
- bonne souplesse du tube pour faciliter le montage notamment de la tubulure d'alimentation en carburant ;
- bonne résistance au ZnCl₂ (par exemple, en hiver, lorsque les routes sont salées, l'extérieur du tube étant exposé à cet environnement).

De plus, les tubes recherchés doivent éviter les inconvénients suivants :
- si le tube est un tube multicouche, le délaminage des couches, notamment internes, notamment lors de l'insertion de raccord (ce qui peut conduire à des fuites) ;
- un gonflement excessif du tube après vieillissement dans les systèmes essence/diesel (y compris pour les biodiesels ou bio essences), qui peut conduire à des fuites ou des problèmes de positionnement sous le véhicule.

A l'heure actuelle, il existe deux types de tubes, des tubes monocouches et multicouches, c'est-à-dire constitués d'une ou plusieurs couches de polymère.

De manière classique, les tubes utilisés sont fabriqués par mono-extrusion, s'il s'agit d'un tube monocouche, ou par co-extrusion des différentes couches, s'il s'agit d'un tube multicouche, selon les techniques habituelles de transformation des thermoplastiques.

Pour assurer une bonne stabilité dimensionnelle d'un tube multicouche, il est essentiel d'avoir une excellente adhésion entre les différentes couches de polymères formant le tube. De manière très classique, on interpose une couche adhésive entre deux couches polymères qui, de par leur composition, n'adhèrent pas ou pas suffisamment entre elles, pour répondre aux cahiers des charges mentionnés précédemment.

D'une manière plus générale, le problème à résoudre est d'associer des matériaux polyamides fortement carbonés, qui sont des matériaux très souples et très endurants (en particulier en choc à froid, en vieillissement dans l'air chaud, en résistance au chlorure de zinc), qui constitueront généralement la partie externe du tube, à des matériaux barrières, c'est-à-dire des matériaux peu perméables aux liquides, qui constitueront la face interne du tube et seront parfois en contact direct avec les liquides, tel que l'essence ou autres fluides précédemment cités.

Ces matériaux barrières peuvent être des polyamides faiblement carbonés, de préférence semi-cristallins et de haut point du fusion, mais aussi des matériaux barrières non polyamides tels que le copolymère d'éthylène et d'alcool vinylique (noté EVOH ci-après), voire même des matériaux fluorés fonctionnalisés tels que le polyfluorure de vinylidène (PVDF) fonctionnalisé, le copolymère d'éthylène et de tétrafluoroéthylène (ETFE) fonctionnalisé, le copolymère d'éthylène, de tétrafluoroéthylène et d'hexafluoro-propylène (EFEP) fonctionnalisé, le polysulfure de phénylène (PPS) fonctionnalisé, le polynaphtalate de butylène (PBN) fonctionnalisé.

Il est connu du document FR 2 974 028 une structure multicouche comprenant en tant que couche externe, une couche d'une composition comprenant majoritairement un ou plusieurs copolyamides semi-cristallins particuliers et en tant que couche interne, une couche barrière à base de polymères fluorés particuliers, ainsi que son utilisation pour le transfert et/ou le stockage de fluides, tels qu'une huile, un liquide à base de solution d'urée, un carburant, notamment un carburant alcoolisé, un liquide de refroidissement, un fluide réfrigérant ou encore des émanations de gaz moteur.

Selon la présente invention, le terme "polyamide", également noté PA, vise :
- les homopolymères,
- les copolymères, ou copolyamides, à base de différents motifs amide, tel par exemple le copolyamide 6/12 avec des motifs amide dérivés du lactame-6 et du lactame-12.
Le symbole "/" sert à délimiter les motifs d'un copolymère.

Il existe aussi une catégorie de copolyamides au sens large, qui bien que non préférée, fasse partie du cadre de l'invention. Il s'agit de copolymères à blocs PA, notamment des copolyamides comprenant non seulement des motifs amides (qui seront majoritaires, d'où le fait qu'ils soient à considérer comme des copolyamides au sens large), mais aussi des motifs de nature non amide, par exemple des motifs éthers ou des motifs polyoléfines. Les exemples les plus connus sont les PEBA ou polyéther-bloc-amide, et leurs variantes copolyamide-ester-éther, copolyamide-éther, copolyamide ester. Parmi ceux-ci, citons le PEBA-12 où les motifs polyamide sont les mêmes que ceux du PA12, le PEBA-6.12 où les motifs polyamide sont les mêmes que ceux du PA6.12.

On distingue également les homopolyamides et copolyamides par leur nombre d'atomes de carbone par atome d'azote, sachant qu'il y a autant d'atomes d'azote que de groupes amides (-CO-NH-).

Dans le cas d'un homopolyamide de type PA-X.Y, le nombre d'atomes de carbone par atome d'azote est la moyenne du motif X et du motif Y.

Dans le cas des copolyamides, le nombre d'atome de carbone par atome d'azote se calcule selon le même principe. Le calcul est réalisé au prorata molaire des différents motifs amides.

Un polyamide fortement carboné est un polyamide à fort taux d'atomes de carbone (C) par rapport à l'atome d'azote (N). Ce sont les polyamides avec environ au moins 9 atomes de carbone par atome d'azote, tel par exemple le polyamide-9, le polyamide-12, le polyamide-11, le polyamide-10.10 (PA10.10), le copolyamide 12/10.T, le copolyamide 11/10.T, le polyamide-12.T, le polyamide-6.12 (PA6.12). T représente l'acide téréphtalique.

Un polyamide faiblement carboné est un polyamide à faible taux d'atomes de carbone (C) par rapport à l'atome d'azote (-NH-). Ce sont les polyamides avec environ moins de 9 atomes de carbone par atome d'azote, tel par exemple le polyamide-6, le polyamide-6.6, le polyamide-4.6, le copolyamide-6.T/6.6, le copolyamide 6.I/6.6, le copolyamide 6.T/6.I/6.6, le polyamide 9.T. I représente le diacide isophtalique.

Dans le cas d'un homopolyamide de type PA-X.Y, le nombre d'atomes de carbone par atome d'azote est la moyenne du motif X et du motif Y. Ainsi le PA6.12 est un PA à 9 atomes de carbone par atome d'azote, autrement dit est un PA en C9. Le PA6.13 est en C9.5. Le PA-12.T est en C10, le T, c'est-à-dire l'acide téréphtalique, étant en C8.

Dans le cas des copolyamides, le nombre d'atomes de carbone par atome d'azote se calcule selon le même principe. Le calcul est réalisé au prorata molaire des différents motifs amides. Ainsi le coPA-6.T/6.6 60/40% mol est en C6,6 : 60%x(6+8)/2+40%x(6+6)/2 = 6,6. Dans le cas d'un copolyamide ayant des motifs de type non amide, le calcul s'effectue uniquement sur la part de motifs amides. Ainsi, par exemple, le PEBA-12, qui est un copolymère bloc de motifs amide 12 et de motifs éther, le nombre de carbone sera 12, comme pour le PA12 ; pour le PEBA-6.12, il sera de 9, comme pour le PA6.12.

Dans le cas d'un copolyamide ayant des motifs non amides, le calcul s'effectue uniquement sur la part de motifs amides. Ainsi, par exemple, pour le PEBA-12 qui est un copolymère bloc de motifs amides 12 et de motifs éthers, le nombre d'atome de carbone sera 12, comme pour le PA12. Pour le PEBA-6.12, il sera de 9, comme pour le PA6.12.

Ainsi, des polyamides fortement carbonés comme le polyamide PA12 ou 11 n'adhèrent pas suffisamment sur un polymère EVOH, sur un polyamide faiblement carboné comme le polyamide PA6, ou encore sur un alliage de polyamide PA6 et de polyoléfine (comme, par exemple, un Orgalloy® commercialisé par la société Arkema).

Toutefois, on observe que les structures de tubes actuellement proposées ne sont pas satisfaisantes pour une utilisation dédiée aux bio-carburants, les exigences des cahiers des charges des constructeurs automobiles rappelées ci-avant ne pouvant être toutes simultanément remplies.

Les bio-carburants ne sont pas uniquement issus du pétrole mais comprennent une proportion de produits polaires tels les alcools d'origine végétale, comme l'éthanol ou le méthanol, d'au moins 3%. Ce taux peut monter jusqu'à 85%, voire 95%.

En outre, la température de circulation du carburant tend à s'élever du fait des nouveaux moteurs (plus confinés, opérant à plus haute température).

Des liants à base de copolyamides sont connus. Le document EP 1 162 061 (EMS-CHEMIE AG) décrit comme adhésif ou liant, des matériaux à base d'un ou plusieurs copolyamides, ces copolyamides étant constitués de motifs faiblement carbonés et de motifs fortement carbonés. Par exemple, le copolyamide 6/12 avec des proportions assez semblables de motifs 6 et de motifs 12 est mis en oeuvre pour faire adhérer du PA12 sur du PA6, du PA12 sur de l'EVOH, du PA11 sur du PA6 ou encore du PA11 sur de l'EVOH.

Toutefois, il a été constaté qu'une telle composition adhésive à base de copolyamide(s) verra son adhésion chuter fortement dans de l'éthanol chaud ou au contact prolongé dans des mélanges polaire/apolaire tel la bio-essence (éthanol/essence à base d'hydrocarbures apolaires) chaude.

Tous ces liants, assez peu cristallins, présentent l'inconvénient de tendre à se dissoudre et donc à perdre leur intégrité et leur cohésion mécanique dans ces fluides chauds. L'adhésion n'est, de ce fait, plus assurée. Le problème est d'autant plus critique que le taux d'alcool dans l'essence augmente et que la température augmente.

Des compositions adhésives non plus à base de copolyamides, peu à pas cristallins, mais à base de mélanges de polyamides plus cristallins, en alliant au moyen d'un agent compatibilisant un polyamide fortement carboné tel le PA12 à un polyamide faiblement carboné fortement cristallin et/ou barrière tel le PA6 (par exemple dans EP1452307 et US6,555,243 de la société EMS-CHEMIE, dans US2004/0058111 de la société Saint-Gobain) conduisent à des niveaux d'adhésion initiale faibles et insuffisants.

Des essais ont été réalisés à partir de mélanges de polyamides cristallins. Ainsi, il a été réalisé une composition adhésive comprenant 40% de PA6, 40% PA12 et 20% de compatibilisant type EPR fonctionnalisé (Exxelor VA1801). Cette composition est certes plus résistante à l'effet de dissolution du biocarburant chaud, mais l'adhésion demeure à un niveau faible ou moyen et insuffisant par rapport aux résultats souhaités. Les conséquences de cette mauvaise adhésion sont un gonflement excessif résultant de la désolidarisation des couches, ainsi qu'une perméabilité aux carburants devenue très forte après immersion ou circulation des carburants à l'intérieur du tube, l'étanchéité n'étant plus maintenue entre les couches, et pouvant conduire à des fuites au raccord.

Partant de ce constat, il devient donc nécessaire de rechercher une composition adhésive capable non seulement d'offrir une adhésion initiale suffisante mais également pérenne, c'est-à-dire suffisante après contact prolongé dans la bio-essence. Cette composition doit aussi permettre d'obtenir des tubes multicouches répondant aux cahiers des charges des constructeurs automobiles, en particulier lors de l'utilisation des bio-carburants.

La présente invention vise donc à remédier aux inconvénients relevés ci-dessus et à proposer une composition adhésive qui soit performante en terme d'adhésion pour permettre son utilisation dans des structures multicouches de tubes destinés au transfert de fluides, notamment des carburants, que ceux-ci soient des carburants conventionnels ou des bio-carburants et ce, même pour des températures de circulation de fluides élevées, ces températures de circulation pouvant aller de 40 à 150°C en fonction de la composition du carburant : entre 60 et 90°C pour des essences très alcoolisées (par exemple pour le "E85", essence à 85% d'éthanol, essence de référence au Brésil et en Suède ; par exemple pour le "E50", essence de test typique en Europe) et entre 120 et 150°C pour les essences peu ou pas alcoolisées (essence sans plomb, par exemple).

En outre, la composition adhésive selon l'invention doit pouvoir être mise en oeuvre quelles que soient les couches adjacentes formant la structure des tubes considérés, et pas uniquement avec des couches adjacentes à base de polyamide ou d'EVOH, comme dans le document US 2004/0265527.

La présente invention vise également à fournir des structures multicouches mettant en oeuvre une composition adhésive remédiant aux inconvénients cités ci-dessus.

Enfin, l'invention porte sur un copolyamide particulier possédant un fort pouvoir d'adhésion. Il a été observé que ce pouvoir perdure même après un contact prolongé dans des fluides froids ou chauds, ces fluides pouvant être de nature polaire, apolaire et surtout mixte, tel les bio-carburants.

Selon l'invention, la composition adhésive comprend majoritairement un ou deux polyamides constitué(s) des motifs choisis parmi :
- au moins un motif noté A présentant un nombre moyen d'atomes de carbone par atome d'azote noté C_{A} allant de 4 à 8,5, avantageusement de 4 à 7 ;
- au moins un motif noté B présentant un nombre moyen d'atomes de carbone par atome d'azote noté C_{B} allant de 7 à 10, avantageusement de 7,5 à 9,5 ; et
- au moins un motif noté C présentant un nombre moyen d'atomes de carbone par atome d'azote noté C_{C} allant de 9 à 18, avantageusement de 10 à 18 ; et
- éventuellement au moins un motif Z différent d'un motif amide ;
les motifs A, B et C étant présents au sein dudit polyamide ou ensemble au sein desdits polyamides ;
un des motifs A, B ou C étant en proportion très majoritaire au sein du ou des copolyamides et représentant de 80% à 97% en poids par rapport au poids total du copolyamide,
le nombre moyen d'atomes de carbone par atome d'azote des motifs A, B et C répondant en outre à l'inéquation stricte suivante : C_{A} < C_{B} < C_{C},
l'enthalpie de fusion du polyamide ou bien la moyenne pondérée massique des enthalpies de fusion du mélange de polyamides au sein de ladite composition étant supérieure à 25J/g (DSC),
la température de fusion du ou de chacun des polyamides étant supérieure à 150°C (DSC).

L'expression "un ou plusieurs motifs A, B et C" couvre bien évidemment des mélanges comprenant deux, ou plus, des motifs A, B et C tels que définis ci-dessus.

Il est préférable dans le cadre de la présente invention d'avoir 3 motifs polyamide : un motif A, un motif B et un motif C. Il demeure néanmoins possible d'avoir plusieurs motifs d'un même type au sein du ou des polyamides de l'invention, comme par exemple des polyamides de type A, B, C et en plus C' ; A, B, B' et C ; A, A', B et C ; A, B, B', C et C' ; A, A', B, B', C et C' ou encore par exemple A, B, C, C' et C", dans lesquels les motifs A et A' par exemple répondent à la même définition du motif A.

Cette composition adhésive présente l'avantage d'être universelle, c'est-à-dire d'adhérer sur les couches polymères habituellement utilisées dans la conception des tubes définis ci-dessus, à savoir, les compositions à base de polyamides fortement carbonés, tels le PA11, le PA12, d'une part et d'autre part, les compositions à base de polyamides faiblement carbonés tels le PA6, le PA6.6, les compositions à base d'EVOH ou encore les alliages de polyamides faiblement carbonés et de polyoléfines.

De plus, il a été constaté qu'après contact avec des essences alcoolisées, à chaud et pendant un certain temps (par exemple 80°C pendant 200h), telle que l'essence dénommée E50 comprenant en masse 50% d'éthanol et 50% d'essence additivée (l'essence pouvant par exemple être de type L additivée par 5% d'eau et 1% de méthanol, selon la norme du constructeur Peugeot SA B31 5220, ou être par exemple du type "Fuel C", ce dernier étant un étant un mélange d'iso-octane et de toluène à parts égales), l'adhésion reste supérieure aux recommandations des constructeurs automobiles après une durée prolongée à haute température.

D'autres objets, aspects, caractéristiques de l'invention apparaîtront à la lecture de la description suivante.

D'autre part, tout intervalle de valeurs désigné par l'expression "entre a et b" représente le domaine de valeurs allant de plus de a à moins de b (c'est-à-dire bornes a et b exclues), tandis que tout intervalle de valeurs désigné par l'expression "de a à b" signifie le domaine de valeurs allant de a jusqu'à b (c'est-à-dire incluant les bornes strictes a et b).

### Structure du polyamide

La nomenclature utilisée pour définir les polyamides est décrite dans la norme ISO 1874-1:1992 *"Plastiques* - *Matériaux polyamides (PA) pour moulage et extrusion* - *Partie 1 : Désignation",* notamment en page 3 (tableaux 1 et 2) et est bien connue de l'homme du métier.

Le ou les polyamides selon l'invention sont constitués des motifs choisis parmi :
- au moins un motif noté A présentant un nombre moyen d'atomes de carbone par atome d'azote noté C_{A} allant de 4 à 8,5, avantageusement de 4 à 7 ;
- au moins un motif noté B présentant un nombre moyen d'atomes de carbone par atome d'azote noté C_{B} allant de 7 à 10, avantageusement de 7,5 à 9,5 ; et
- au moins un motif noté C présentant un nombre moyen d'atomes de carbone par atome d'azote noté C_{C} allant de 9 à 18, avantageusement de 10 à 18 ;
- éventuellement au moins un motif Z différent d'un motif amide ;
les trois motifs A, B et C étant présents au sein dudit polyamide ou ensemble au sein desdits polyamides ;
un des motifs A, B ou C au sein du ou des copolyamides étant en proportion très majoritaire et représentant de 80% à 97% en poids par rapport au poids total du copolyamide,
le nombre moyen d'atomes de carbone par atome d'azote des motifs A, B et C répondant en outre à l'inéquation stricte suivante : C_{A} < C_{B} < C_{C}.

La différence entre les nombres moyens d'atomes de carbone par atome d'azote (C_{B}-C_{A}) et/ou (C_{C}-C_{B}) peut aller de 1 à 4, et de préférence de 2 à 3.

### Le motif A

Le motif A présente un rapport entre le nombre d'atomes de carbone sur le nombre d'atomes d'azote noté C_{A} allant de 4 à 8,5, préférentiellement de 4 à 7.

Le motif A est choisi parmi des motifs dérivés d'un aminoacide, un lactame et un motif répondant à la formule (diamine en Ca).(diacide en Cb), avec a représentant le nombre d'atomes de carbone de la diamine et b représentant le nombre d'atomes de carbone du diacide, a et b étant chacun allant de 4 à 13, ces motifs étant choisi de manière à respecter le nombre d'atomes de carbone sur le nombre d'atomes d'azote noté C_{A} allant de 4 à 8,5. Le motif A peut désigner un mélange des différents motifs précités.

Lorsque le motif A représente un motif dérivé d'un un lactame, il peut être choisi parmi la pyrrolidinone, la 2-pipéridinone, le caprolactame (A=6), l'énantholactame, le caprylolactame.

Lorsque le motif A représente un motif dérivé d'un motif répondant à la formule (diamine en Ca).(diacide en Cb), le motif (diamine en Ca) est choisi parmi les diamines aliphatiques, linéaires ou ramifiées, les diamines cycloaliphatiques et les diamines alkylaromatiques.

Lorsque la diamine est aliphatique et linéaire, de formule H₂N-(CH₂)ₐ-NH₂, le monomère (diamine en Ca) est préférentiellement choisi parmi la butanediamine (a=4), la pentanediamine (a=5), la hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13).

Lorsque la diamine est aliphatique et ramifiée, elle peut comporter par exemple un ou plusieurs substituants méthyle ou éthyle sur la chaîne principale. Par exemple, le monomère (diamine en Ca) peut avantageusement être choisi parmi la 2,2,4-triméthyl-1,6-hexanediamine, la 2,4,4-triméthyl-1,6-hexanediamine, le 1,3-diaminopentane, la 2-méthyl-1,5-pentanediamine, la 2-méthyl-1,8-octanediamine.

Lorsque le monomère (diamine en Ca) est cycloaliphatique, il est préférentiellement choisi parmi la bis(3,5-dialkyl-4-aminocyclohexyl)méthane, la bis(3,5-dialkyl-4-aminocyclohexyl)éthane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-méthane (PACM) et l'isopropylidènedi(cyclohexylamine) (PACP). Il peut également comporter les squelettes carbonés suivants : norbornyl méthane, cyclohexylméthane, dicyclohexylpropane, di(méthylcyclohexyl), di(méthylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Ca) est alkylaromatique, il est préférentiellement choisi parmi la 1,3-xylylène diamine et la 1,4-xylylène diamine.

Lorsque le motif A est un motif répondant à la formule (diamine en Ca).(diacide en Cb), le motif (diacide en Cb) est choisi parmi les diacides aliphatiques, linéaires ou ramifiés, les diacides cycloaliphatiques et les diacides aromatiques.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13).

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est préférentiellement choisi parmi l'acide téréphtalique (noté T), isophtalique (noté I) et les diacides naphtaléniques.

De préférence, le motif A est choisi parmi les motifs dérivés des monomères suivants : 6, 4.6, 6.6, 6.T, 6.I, 9.T, 9'T, 9' désignant la 2-méthyl-1,8-octanediamine, c'est à dire l'isomère de la diamine-9 ou 1,9-nonanediamine, 6/6.6, 6.T/6.6, 6.T/6.I/6.6. Plus particulièrement, le motif A est choisi parmi les motifs dérivés des monomères suivants : 6, 4.6 et 6.6.

### Le motif B

Le motif B présente un rapport entre le nombre d'atome de carbone sur le nombre d'atomes d'azote noté C_{B} allant de 7 à 10, préférentiellement de 7,5 à 9,5.

Le motif B est choisi parmi des motifs dérivés d'un aminoacide, un lactame et un motif répondant à la formule (diamine en Cc).(diacide en Cd), avec c représentant le nombre d'atomes de carbone de la diamine et d représentant le nombre d'atomes de carbone du diacide, c et d allant chacun de 4 à 16, ces motifs étant choisi de manière à respecter le nombre d'atomes de carbone sur le nombre d'atomes d'azote noté CB allant 7 de 10. Le motif B peut désigner un mélange des différents motifs précités.

Lorsque le motif B représente un motif dérivé d'un aminoacide, il peut être choisi parmi l'acide 9-aminononanoïque (B=9), l'acide 10-aminodécanoïque (B=10).

Lorsque le motif B représente un motif dérivé d'un lactame, il peut être choisi parmi l'énantholactame, le caprylolactame, le pelargolactame, le décanolactame.

Lorsque le motif B représente un motif dérivé d'un motif répondant à la formule (diamine en Cc).(diacide en Cd), le motif (diamine en Cc) est choisi parmi les diamines aliphatiques, linéaires ou ramifiées, les diamines cycloaliphatiques et les diamines alkylaromatiques.

Lorsque la diamine est aliphatique et linéaire, de formule H₂N-(CH₂)_{c}-NH₂, le monomère (diamine en Cc) est préférentiellement choisi parmi la butanediamine (c=4), la pentanediamine (c=5), la hexanediamine (c=6), l'heptanediamine (c=7), l'octanediamine (c=8), la nonanediamine (c=9), la décanediamine (c=10), l'undécanediamine (c=11), la dodécanediamine (c=12), la tridécanediamine (c=13), la tétradécanediamine (c=14), l'hexadécanediamine (c=16).

Lorsque la diamine est aliphatique et ramifiée, elle peut comporter un ou plusieurs substituants méthyle ou éthyle sur la chaîne principale. Par exemple, le monomère (diamine en Cc) peut avantageusement être choisi parmi la 2,2,4-triméthyl-1,6-hexanediamine, la 2,4,4-triméthyl-1,6-hexanediamine, le 1,3-diaminopentane, la 2-méthyl-1,5-pentanediamine, la 2-méthyl-1,8-octanediamine.

Lorsque le monomère (diamine en Cc) est cycloaliphatique, il est préférentiellement choisi parmi la bis(3,5-dialkyl-4-aminocyclohexyl)méthane, la bis(3,5-dialkyl-4-aminocyclohexyl) éthane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-méthane (PACM) et l'isopropylidènedi (cyclohexylamine) (PACP). Il peut également comporter les squelettes carbonés suivants : norbornyl méthane, cyclohexylméthane, dicyclohexylpropane, di(méthylcyclohexyl), di(mcthylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Cc) est alkylaromatique, il est préférentiellement choisi parmi la 1,3-xylylène diamine et la 1,4-xylylène diamine.

Lorsque le motif B représente un motif dérivé d'un motif répondant à la formule (diamine en Cc).(diacide en Cd), le motif (diacide en Cd) est choisi parmi les diacides aliphatiques, linéaires ou ramifiés, les diacides cycloaliphatiques et les diacides aromatiques.

Lorsque le monomère (diacide en Cd) est aliphatique et linéaire, il est préférentiellement choisi parmi l'acide succinique (d=4), l'acide pentanedioïque (d=5), l'acide adipique (d=6), l'acide heptanedioïque (d=7), l'acide octanedioïque (d=8), l'acide azélaïque (d=9), l'acide sébacique (d=10), l'acide undécanedioïque (d=11), l'acide dodécanedioïque (d=12), l'acide brassylique (d=13), l'acide tétradécanedioïque (d=14), l'acide hexadécanedioïque (d=16).

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(méthylcyclohexyl)propane.

Lorsque le diacide est aromatique, il est préférentiellement choisi parmi l'acide téréphtalique (noté T), isophtalique (noté I) et les diacides naphtaléniques.

De préférence, le motif B représente un motif choisi parmi les monomères suivants : 6.10, 6.12, 9.T et 9'.T, 6.14, 6.10/6.12. Plus particulièrement, le motif B désigne le monomère 6.10 ou 6.12.

### Le motif C

Le motif C présente un rapport entre le nombre d'atome de carbone sur le nombre d'atomes d'azote noté C_{C} allant de 9 à 18, préférentiellement de 10 à 18.

Le motif C est choisi parmi des motifs dérivés d'un aminoacide, un lactame et un motif répondant à la formule (diamine en Ce).(diacide en Cf), avec e représentant le nombre d'atomes de carbone de la diamine et f représentant le nombre d'atomes de carbone du diacide, e et f allant chacun de 4 à 32, ces motifs étant choisi de manière à respecter le nombre d'atomes de carbone sur le nombre d'atomes d'azote noté C_{B} allant 9 de 18. Le motif C peut désigner un mélange des différents motifs pré-cités.

Lorsque le motif C représente un motif dérivé d'un aminoacide, il peut être choisi parmi l'acide 9-aminononanoïque (C=9), l'acide 10-aminodécanoïque (C=10), l'acide 10-aminoundécanoïque (noté 11), l'acide 12-aminododécanoïque (C=12) et l'acide 11-aminoundécanoïque (C=11) ainsi que ses dérivés, notamment l'acide N-heptyl-11-aminoundécanoïque.

Lorsque le motif C représente un motif dérivé d'un lactame, il peut être choisi parmi le pélargolactame, le décanolactame, l'undecanolactame, et le lauryllactame (C=12).

Lorsque le motif C représente un motif dérivé d'un motif répondant à la formule (diamine en Ce).(diacide en Cf), le motif (diamine en Ce) est choisi parmi les diamines aliphatiques, linéaires ou ramifiées, les diamines cycloaliphatiques et les diamines alkylaromatiques.

Lorsque la diamine est aliphatique et linéaire, de formule H₂N-(CH₂)e-NH₂, le monomère (diamine en Ce) est préférentiellement choisi parmi la butanediamine (e=4), la pentanediamine (e=5), la hexanediamine (e=6), l'heptanediamine (e=7), l'octanediamine (e=8), la nonanediamine (e=9), la décanediamine (e=10), l'undécanediamine (e=11), la dodécanediamine (e=12), la tridécanediamine (e=13), la tétradécanediamine (e=14), l'hexadécanediamine (e=16), l'octadécanediamine (e=18), l'octadécènediamine (e=18), l'eicosanediamine (e=20), la docosanediamine (e=22) et les diamines obtenues à partir d'acides gras.

Lorsque la diamine est aliphatique et ramifiée, elle peut comporter un ou plusieurs substituants méthyle ou éthyle sur la chaîne principale. Par exemple, le monomère (diamine en Ce) peut avantageusement être choisi parmi la 2,2,4-triméthyl-1,6-hexanediamine, la 2,4,4-triméthyl-1,6-hexanediamine, le 1,3-diaminopentane, la 2-méthyl-1,5-pentanediamine, la 2-méthyl-1,8-octanediamine.

Lorsque le monomère (diamine en Ce) est cycloaliphatique, il est préférentiellement choisi parmi la bis(3,5-dialkyl-4-aminocyclohexyl)méthane, la bis(3,5-dialkyl-4-aminocyclohexyl)éthane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-méthane (PACM) et l'isopropylidènedi(cyclohexylamine) (PACP). Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Ce) est alkylaromatique, il est préférentiellement choisi parmi la 1,3-xylylène diamine et la 1,4-xylylène diamine.

Lorsque le motif C est un motif répondant à la formule (diamine en Ce).(diacide en Cf), le motif (diacide en Cf) est choisi parmi les diacides aliphatiques, linéaires ou ramifiés, les diacides cycloaliphatiques et les diacides aromatiques.

Lorsque le monomère (diacide en Cf) est aliphatique et linéaire, il est préférentiellement choisi parmi l'acide succinique (f=4), l'acide pentanedioïque (f=5), l'acide adipique (f=6), l'acide heptanedioïque (f=7), l'acide octanedioïque (f=8), l'acide azélaïque (f=9), l'acide sébacique (f=10), l'acide undécanedioïque (f=11), l'acide dodécanedioïque (f=12), l'acide brassylique (f=13), l'acide tetradécanedioïque (f=14), l'acide hexadécanedioïque (f=16), l'acide octadécanedioïque (f=18), l'acide octadécènedioïque (f=18), l'acide eicosanedioïque (f=20), l'acide docosanedioïque (f=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est préférentiellement choisi parmi l'acide téréphtalique (noté T), isophtalique (noté I) et les diacides naphtaléniques.

Le motif C représente un motif choisi parmi les dérivés de monomères suivants : 12, 11, 10.10, 10.12, 6.18, 10.T, 12.T, 12/10.T, 12.12, 10.10/10.12 et 10.10/10.T. Plus particulièrement, le motif C désigne le monomère 12, 11, 10.10, ou encore 10.12.

Les motifs utilisés pour le ou les polyamides de la composition selon l'invention sont, de préférence, des polyamides aliphatiques.

### Enthalpie de fusion

L'enthalpie de fusion du polyamide ou bien la moyenne pondérée massique des enthalpies de fusion du mélange de polyamides selon l'invention au sein de ladite composition étant supérieure à 25J/g (DSC), mesurée par DSC conformément à la norme ISO 11357.

Ainsi, le polyamide ou les polyamides selon l'invention sont soumis à une première chauffe de 20°C/min jusqu'à une température de 340°C, puis à un refroidissement 20°C/min jusqu'à une température de 20°C, puis à une seconde chauffe de 20°C/min jusqu'à une température de 340°C, l'enthalpie de fusion étant mesurée lors de cette seconde chauffe.

De préférence, l'enthalpie de fusion va de 30J/g à 60J/g.

### Température de fusion

La température de fusion du ou de chacun des polyamides est supérieure à 150°C, mesurée par DSC (Differential Scanning Calorimetry) conformément à la norme ISO 11357.

De préférence, la température de fusion va de 155 à 300°C.

De préférence, la température de fusion de l'homopolyamide constitué de motif A est supérieure ou égale à 210°C.

De préférence, la température de fusion de l'homopolyamide constitué de motif C est inférieure à 200°C.

### Teneurs

De préférence, le motif A, B ou C majoritaire représente de 85% à 95% en poids par rapport au poids total de motifs amides au sein du polymère (que le polyamide soit constitué uniquement de motifs amide ou non (cas ou l'on a A/B/C/Z, Z étant un PEBA par exemple)).

Il est rappelé que le terme polyamide couvre les homopolyamides et des copolyamides, et que les copolyamides couvrent les terpolyamides.

### Le Motif Z

Le ou les polyamides selon l'invention peuvent comprendre au moins un motif Z différent d'un motif amide. De préférence, ce motif est choisi parmi les motifs éthers, esters et alpha-oléfine. En d'autres termes, le ou les polyamides selon l'invention peuvent comprendre un bloc polyéther (PE), polyester ou polyoléfine.

### Motifs éther

Le bloc PE comporte des motifs oxyde d'alkylène. Ces motifs peuvent être des motifs oxyde d'éthylène, oxyde de propylène ou tétrahydrofurane (qui conduit aux enchaînements polytétraméthylène glycol). Avantageusement, ledit bloc PE compris dans le copolymère selon l'invention est choisi parmi le polyéthylène glycol (PEG), c'est à dire constitué de motifs d'oxyde d'éthylène, le polypropylène glycol (PPG), c'est à dire constitué de motifs d'oxyde de propylène, le polytétraméthylène glycol (PTMG), c'est à dire constitué de motifs de tetraméthylène glyco, et leurs copolymères. Le copolymère selon l'invention peut comprendre plusieurs types de polyéthers, les copolyéthers pouvant être à blocs ou statistiques.

On peut également utiliser des blocs obtenus par oxyéthylation de bisphénols, tels que par exemple le bisphénol A. Ces derniers produits sont décrits dans le brevet EP613919.

Les blocs polyéthers peuvent aussi être constitués d'amines primaires éthoxylées. A titre d'exemple d'amines primaires éthoxylées on peut citer les produits de formule : 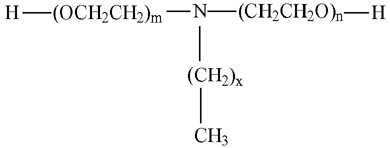 dans laquelle m et n sont compris entre 1 et 20 et x entre 8 et 18. Ces produits sont disponibles dans le commerce sous la marque NORAMOX® de la société CECA et sous la marque GENAMIN® de la société CLARIANT.

Les blocs polyéthers (PE) peuvent comprendre des blocs polyoxyalkylène à bouts de chaînes NH₂, de tels blocs pouvant être obtenus par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman, également décrites dans les documents de brevets JP2004346274, JP2004352794 et EP1482011).

### Motifs esters

Le bloc polyester (PES) utilisable selon l'invention est un polyester obtenu par polycondensation entre un acide dicarboxylique et un diol. Les acides carboxyliques appropriés comprennent ceux mentionnés ci-dessus utilisés pour former les blocs polyamide à l'exception des acides aromatiques, comme l'acide téréphtalique et isophtalique. Les diols appropriés comprennent les diols aliphatiques linéaires tels que l'éthylène glycol, le 1,3-propylène glycol, le 1,4-butylène glycol, le 1,6-hexylène glycol, les diols branchés tel que le néopentylglycol, le 3-méthylpentane glycol, le 1,2-propylène glycol, et les diols cycliques tels que le 1,4-bis(hydroxyméthyl)cyclohexane et le 1,4-cyclohexane-diméthanol. Un exemple de polyester utilisé est la famille polyadipate.

On entend également par polyesters, le poly(caprolactone) et les PES à base de dimères d'acide gras, en particulier les produits de la gamme PRIPLAST® de la société Uniqema.

On peut également envisager un bloc PES de type «copolyester» alterné, statistique ou à blocs, contenant un enchaînement d'au moins deux types de PES cités ci-dessus.

### Motif polyoléfine

Le bloc polyoléfine (PO) utilisable selon l'invention est un polymère comprenant comme monomère une alpha-oléfine, c'est-à-dire les homopolymères d'une oléfine ou les copolymères d'au moins une alpha-oléfine et d'au moins un autre monomère copolymérisable, l'alpha-oléfine ayant avantageusement de 2 à 30 atomes de carbone.

A titre d'exemple d'alpha-oléfine, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou plus de deux.

A titre d'exemples, on peut citer :
- les homopolymères et copolymères de l'éthylène, en particulier le polyéthylène basse densité (LDPE), le polyéthylène haute densité (HDPE), le polyéthylène linéaire basse densité (LLDPE), le polyéthylène très basse densité (VLDPE), le polyéthylène obtenu par catalyse métallocène,
- les homopolymères et copolymères du propylène,
- les polyalphaoléfines essentiellement amorphes ou attactiques (APAO),
- les copolymères éthylène/alpha-oléfine tels qu'éthylène/propylène, les élastomères EPR (éthylène-propylène-rubber), et EPDM (éthylène- propylène-diène), et les mélanges de polyéthylène avec un EPR ou un EPDM,
- les copolymères blocs styrène/éthylène-butène/styrène (SEBS), styrène/ butadiène/styrène (SBS), styrène/isoprène/styrène (SIS), et styrène/éthylène-propylène/styrène (SEPS),
- les copolymères de l'éthylène avec au moins un produit choisi parmi les sels ou les esters d'acides carboxyliques insaturés tels que par exemple les (méth)acrylates d'alkyle, l'alkyle pouvant avoir jusqu'à 24 atomes de carbone, les esters vinyliques d'acides carboxyliques saturés tels que par exemple l'acétate ou le propionate de vinyle, et les diènes tels que par exemple le 1,4-hexadiène ou le polybutadiène.

Selon un mode de réalisation avantageux de l'invention, ledit au moins un bloc polyoléfine comprend du polyisobutylène et/ou du polybutadiène hydrogéné ou non.

De préférence, le ou les polyamides selon l'invention ne comportent que des motifs amide.

De préférence, le ou les deux polyamides selon l'invention désignent un terpolyamide, un homopolyamide combiné à un copolyamide ou encore deux copolyamides.

### Premier mode de réalisation

Par terpolyamide, on entend au sens de la présente invention un copolyamide constitué des motifs A, B et C.

Selon un premier mode de réalisation de l'invention, le polyamide compris dans la composition adhésive de l'invention est un terpolyamide constitué des trois motifs A, B et C précités.

Comme exposé ci-dessus, le terpolyamide selon l'invention peut comprendre plus de trois motifs distincts, mais ces motifs doivent nécessairement être des motifs A, B et C tels que décrits ci-dessus. Le terpolyamide peut être par exemple de structure suivante : A/B/C, A/A'/B/B'/C/C' ou bien A/A'/A"/B/C.

De préférence, le terpolyamide selon l'invention comprend un seul motif A, un seul motif B et un seul motif C.

De préférence, le motif B est le motif majoritaire, et est présent en une proportion représentant de 85% à 95% en poids par rapport au poids total du terpolyamide.

De préférence, le motif amide A est choisi parmi les motifs dérivés des monomères suivants : 6, 4.6, 6.6, 6.T, 9.T et 9'.T, 9' désignant la 2-méthyl-1,8-octanediamine;
le motif amide B est choisi parmi les motifs dérivés des monomères suivants : 6.10, 6.12, 9.T et 9'.T, de préférence 6.10, et
le motif amide C est choisi parmi les motifs dérivés des monomères suivants : 10.10, 11, 12, 10.12, 6.18, 10.T, 12.T, 12/10.T, 12.12 et 10.10/10.T.

Plus particulièrement, le motif amide A est choisi parmi les motifs dérivés des monomères suivants : 6, 4.6 et 6.6 ;
le motif amide B est choisi parmi les motifs dérivés des monomères suivants : 6.10, 6.12, de préférence 6.10, et
le motif amide C est choisi parmi les motifs dérivés des monomères suivants :10.10, 11, 12, 10.12, 12.12 et 6.18.

Le terpolyamide préféré est choisi parmi le PA 6/6.10/12, PA 6/6.12/12 et le PA 6.6/6.10/12.

### Second mode de réalisation

Selon un second mode de réalisation de l'invention, les polyamides compris dans la composition adhésive de l'invention sont un mélange de deux copolyamides différents constitués chacun de deux motifs choisis parmi les motifs A, B et C précités.

Ainsi, ce mode de réalisation couvre les associations de copolyamides suivants : PA A/B + PA A/C ; PA A/B + PA B/C et PA A/C + PA B/C, ou encore PA A/B + PA A'/C ; PA A/B + PA B'/C et PA A/C + PA B/C'.

De préférence, l'association préférée est celle dans laquelle le motif B est présent dans les deux copolyamides, à savoir l'association PA A/B + PA B/C.

De préférence, dans cette association particulière, le motif A est le motif majoritaire dans le copolyamide A/B et le motif C est le motif majoritaire dans le copolyamide B/C.

De préférence, le motif amide A est choisi parmi les motifs dérivés des monomères suivants : 6, 4.6, 6.6, 6.T, 9.T et 9'.T;
le motif amide B est choisi parmi les motifs dérivés des monomères suivants : 6.10, 6.12, 9.T et 9'.T, de préférence 6.10, et
le motif amide C est choisi parmi les motifs dérivés des monomères suivants : 10.10, 11, 12, 10.12, 6.18, 10.T, 12.T, 12/10.T, 12.12 et 10.10/10.T.

Plus particulièrement, le motif amide A est choisi parmi les motifs dérivés des monomères suivants : 6, 4.6 et 6.6 ;
le motif amide B est choisi parmi les motifs dérivés des monomères suivants : 6.10, 6.12, de préférence 6.10, et
le motif amide C est choisi parmi les motifs dérivés des monomères suivants : 10.10, 11, 12, 10.12, 12.12 et 6.18.

De préférence, les associations préférées sont PA6.6/6.10 et PA6.12/12 ; PA6/6.12 et PA6.12/12 ; et enfin PA6/6.10 et PA6.10/12.

### Troisième mode de réalisation

Selon un troisième mode de réalisation de l'invention, les polyamides compris dans la composition adhésive de l'invention sont un mélange d'un copolyamide constitués de deux motifs choisis parmi les motifs A, B et C précités et d'un homopolyamide constitué du motif absent du copolyamide.

Ainsi, ce mode de réalisation couvre les associations de copolyamides suivants : PA A/B + PA C ; PA A/C + PA B et PA B/C + PA A.

Dans le cas de l'association PA A/B + PA C, préférentiellement le motif A est le motif majoritaire dans le copolyamide A/B.

Dans le cas de l'association PA B/C + PA A, préférentiellement le motif C est le motif majoritaire dans le copolyamide B/C.

Plus particulièrement, l'association préférée est PA B/C + PA A, c'est à dire un homopolyamide comprenant majoritairement des motifs A, et plus particulièrement un seul motif A, associé à un copolyamide B/C, le motif B étant le motif majoritaire dans le copolyamide B/C.

De préférence, le motif amide A est choisi parmi les motifs dérivés des monomères suivants : 6, 4.6, 6.6, 6.T, 9.T et 9'.T;
le motif amide B est choisi parmi les motifs dérivés des monomères suivants : 6.10, 6.12, 9.T et 9'.T, de préférence 6.10, et
le motif amide C est choisi parmi les motifs dérivés des monomères suivants : 10.10, 11, 12, 10.12, 6.18, 10.T, 12.T, 12/10.T, 12.12 et 10.10/10.T.

Plus particulièrement, le motif amide A est choisi parmi les motifs dérivés des monomères suivants : 6, 4.6 et 6.6 ;
le motif amide B est choisi parmi les motifs dérivés des monomères suivants : 6.10, 6.12, de préférence 6.10, et
le motif amide C est choisi parmi les motifs dérivés des monomères suivants : 10.10, 11, 12, 10.12, 12.12 et 6.18.

Plus particulièrement, les associations préférées sont PA6 et PA6.12/12 et PA6 et PA6.10/12.

On ne sortirait pas du cadre de la présente invention si l'homopolyamide était remplacé par un copolyamide comportant très minoritairement un motif de même type que le motif majoritaire, comme par exemple un copolyamide PA A/A', PAB/B' ou encore PA C/C'.

Les homo- et copolyamides mis en oeuvre dans les modes de réalisation décrits ci-dessus peuvent comporter un motif différent d'un motif amide. Ainsi, il est possible de prévoir
- un terpolyamide de structure suivante : A/B/C/Z, Z désignant un motif différent d'un motif amide
- un mélange de deux copolyamides différents constitués chacun de deux motifs choisis parmi les motifs A, B et C précités et d'un motif Z différent d'un motif amide.

Ainsi, ce mode de réalisation couvre les associations de copolyamides suivants : PA A/B/Z + PA A/C ; PA A/B + PA A/C/Z ; PA A/B/Z + PA B/C ; PA A/B + PA B/C/Z ; PA A/C/Z + PA B/C et PA A/C + PA B/C/Z.
- un mélange d'un copolyamide constitué de deux motifs choisis parmi les motifs A, B et C précités, d'un homopolyamide constitué du motif absent du copolyamide et d'un motif Z différent d'un motif amide.

Ainsi, ce mode de réalisation couvre les associations de copolyamides suivants : PA A/B/Z + PA C ; PA A/C/Z + PA B ; PA B/C/Z + PA A ; PA A/B + PA C/Z ; PA A/C + PA B/Z et PA B/C + PA A/Z.

De préférence, le ou les polyamides selon l'invention ne comprennent que des motifs amide.

### Nature des additifs possibles

Ainsi, la composition peut comprendre jusqu'à 30% en poids, par rapport au poids total de la composition, d'un modifiant choc constitué par un polymère non rigide présentant un module de flexion inférieur à 100 MPa mesuré selon la norme ISO 178.

Ce polymère non rigide est, de préférence, le plus souple possible et présente une température de transition vitreuse Tg la plus basse possible, c'est-à-dire inférieure à 0°C. Ce modifiant choc est au besoin fonctionnalisé chimiquement de façon à pouvoir réagir avec les polyamides A, B et C et à former un alliage compatible avec eux.

Selon l'invention, le modifiant choc est, de préférence, constitué d'une ou plusieurs polyoléfines, une partie ou la totalité de celles-ci portant une fonction choisie parmi les fonctions acide carboxylique, anhydride carboxylique, époxyde et toute autre fonction susceptible de réagir chimiquement avec les polyamides, typiquement avec ses bouts de chaîne amine (cas de l'acide carboxylique, l'anhydride carboxylique) ou ses bouts de chaînes acides (cas de l'époxyde, en particulier du méthacrylate de glycidyle).

Par exemple, la polyoléfine est choisie parmi :
- un copolymère d'éthylène et de propylène à caractère élastomère (EPR),
- un copolymère éthylène-propylène-diène à caractère élastomère (EPDM) et
- un copolymère éthylène/(méth)acrylate d'alkyle.

Parmi les modifiants choc, citons l'EPR greffé anhydride tel l'Exxelor VA1803 d'Exxon, ou le copolymère de polyéthylène, d'acrylate d'éthyle et d'anhydride maléique (coPE/EA/MAH) tel que le Lotader 4700 de la société Arkema.

### Polyoléfine

La composition adhésive peut également comprendre jusqu'à 45% en poids, par rapport au poids total de la composition, d'un polymère cristallin présentant un module de flexion, mesuré selon la norme ISO 178, supérieur à 300 MPa, avantageusement à 800 MPa.

Ce polymère cristallin est de préférence une polyoléfine rigide semi-cristalline, ou un mélange de polyoléfines rigides semi-cristallines, portant, en sa totalité ou partiellement, une fonction choisie parmi les fonctions acide carboxylique, anhydride carboxylique et époxyde.

De préférence, la polyoléfine, ou le mélange de polyoléfines, est choisie parmi les polyéthylènes de haute densité, les polypropylènes homopolymères ou faiblement copolymérisés.

Lorsqu'il s'agit d'une polyoléfine de taux de cristallinité élevé, elle peut être par exemple un polyéthylène de haute densité noté hdPE, un polyéthylène haute densité fonctionnalisé note hdPEf par un groupe réactif pouvant réagir avec un des bout de chaînes (ou autres fonctions réactives) du polyamide, typiquement cette fonction est une fonction anhydride, ou un polypropylène (PP) de forte densité, typiquement un PP rigide, linéaire, de type homopolymère ou très légèrement copolymérisé.

La composition peut également comprendre jusqu'à 20% en poids, par rapport au poids total de la composition, d'un plastifiant.

### Autres additifs

La composition peut également comprendre jusqu'à 45% en poids, par rapport au poids total de la composition, d'un additif choisi parmi les charges antistatiques, les nucléants, les lubrifiants, les colorants, les pigments, les azurants, les anti-oxydants et les stabilisants.

Les stabilisants usuels utilisés avec des polymères sont des phénols, des phosphites, des absorbeurs UV, des stabilisants du type HALS (Hindered Amine Light Stabiliser), des iodures métalliques, etc. On peut citer l'Irganox 1010, 245, 1098, l'Irgafos 168, le Tinuvin 312, l'Iodide P201 de la société Ciba.

### Force de pelage

La composition selon l'invention présente, de préférence, une force de pelage supérieure à 60 N/cm. Le test d'adhésion dont il est question est réalisé sur un tube de diamètre 8mm et d'épaisseur 1mm. On effectue le pelage d'une des couches en lui faisant subir une traction sous un angle de 90° et à une vitesse de 50mm/mn.

Ainsi, avantageusement, la composition adhésive selon l'invention présente une force d'adhérence d'au moins 60N/cm, lorsqu'elle se situe entre une couche de PA 12 et une couche de PA6 ou d'EVOH, et d'au moins 10N/cm, de préférence au moins 20 N/cm après un séjour de 72h à 80°C dans un mélange de bio-essence type E50 (correspondant à un mélange comprenant en masse 50% d'éthanol et 50% d'essence additivée (l'essence pouvant par exemple être de type L additivée par 5% d'eau et 1% de méthanol, selon la norme du constructeur Peugeot SA B31 5220, ou être par exemple du type "Fuel C", ce dernier étant un étant un mélange d'iso-octane et de toluène à parts égales), l'adhésion reste supérieure aux recommandations des constructeurs automobiles.

Ainsi, ce test d'adhérence dans des conditions difficiles (immersion dans une bio-essence pendant une durée longue et à température élevée) est l'une des caractéristiques requises pour la résolution du problème technique posé.

De plus, afin d'assurer de bonnes propriétés (flexibilité, tenue à l'éclatement, tenue à la déchirure, transparence, rhéologie, aptitude à la transformation en tube ou en film, nucléation, cristallisation, morphologie d'alliage, compatibilisation, homogénéité, constance, adhésion) et, en particulier, de bonnes propriétés de résistance aux chocs et aux chocs après vieillissement (notamment vieillissement oxydatif à haute température), il est possible d'ajouter à la composition adhésive un compatibilisant modifiant choc de nature élastomère et préférentiellement polaire.

### Utilisation

L'invention porte sur l'utilisation de la composition adhésive telle que définie ci-dessus pour la réalisation de structures destinées au transfert et/ou au stockage de fluides, en particulier d'un fluide choisi parmi une huile, un liquide de frein, un liquide de refroidissement, une solution d'urée, un hydrocarbure, un diesel, une essence, en particulier une essence comprenant une forte proportion d'alcools tels que l'éthanol, de l'air comprimé.

L'invention porte également sur l'utilisation de la composition telle que définie ci-dessus en tant que couche adhésive au sein d'une structure multicouche.

L'invention a également pour objet une structure monocouche comprenant majoritairement au moins une composition telle que définition ci-dessus.

### Structure

Le symbole "//" sert à délimiter les couches d'une structure multicouche.

L'invention porte enfin sur une structure multicouche, c'est-à-dire comprenant au moins deux couches, l'une des deux couches, dite couche adhésive ou liant notée (I), étant formée d'une composition adhésive telle que définie ci-dessus.

Selon un premier mode de réalisation de l'invention, la seconde couche est une couche dite couche barrière (II).

Selon une première variante avantageuse de l'invention, la couche barrière (II) peut être formée par une composition comprenant au moins un polymère barrière aux bio-carburants, de préférence choisi parmi l'EVOH, le polyamide faiblement carboné, c'est-à-dire dont le rapport du nombre d'atomes de carbone sur le nombre d'atomes d'azote va de 4 à 7, et leur mélange.

Ainsi, au sein d'une structure bicouche ou d'une structure multicouche, la seconde couche peut comprendre un matériau barrière, qui peut être choisi parmi :
- soit une composition comprenant un copolymère d'éthylène et de vinylalcool (EVOH),
- soit de polyamides faiblement carbonés, par exemple de polyamides faiblement carbonés amorphes de haute Tg (80-200°C).

Selon une deuxième variante avantageuse de l'invention, la couche barrière (II) peut être formée par une composition comprenant un polyamide faiblement carboné, tel qu'explicité ci-avant, et un polymère cristallin présentant un module de flexion, mesuré selon la norme ISO 178, supérieur à 300 MPa, avantageusement à 800 MPa.

De préférence, le polymère cristallin est une polyoléfine, ou un mélange de polyoléfines, rigide(s) semi-cristalline(s), présentant un module de flexion, mesuré selon la norme ISO 178, supérieur à 300 MPa, la polyoléfine rigide portant, en sa totalité ou partiellement, une fonction choisie parmi les fonctions acide carboxylique, anhydride carboxylique et époxyde.

Par exemple, la composition suivante peut être utilisée : un alliage composé d'une matrice en polyamide 6 de Mn 18000 (par exemple l'Ultramid B27 de la société BASF), et de 30% de hdPE (polyéthylène haute densité) de densité 0.96 et d'indice de fluidité 0.3 (à 190°C sous 2,16kg), de 7% de hdPE fonctionnalisé par greffage de 1% d'anhydride maléïque d'indice de fluidité 1 (à 190°C sous 2,16kg), de 1.2% de stabilisants organiques (constitué de 0.8% de phénol Lowinox 44B25 de la société Great Lakes), de 0.2% de phosphite Irgafos 168 de la société Ciba, de 0.2% d'anti-UV Tinuvin 312 de la société Ciba), le tout faisant 100%.

D'autres compositions sont envisageables pour la réalisation de la couche barrière (II).

Selon une troisième variante avantageuse de l'invention, on peut également envisager des compositions à base de polymères, ces polymères étant préférentiellement fonctionnalisés par de l'anhydride ou par une autre fonction réactive avec les bouts de chaîne amine ou acide. A titre non limitatif, on peut citer des polymères fluorés, tels que le polyfluorure de vinylidène (PVDF), le copolymère d'éthylène et de tétrafluoroéthylène (ETFE), le copolymère d'éthylène, de tétrafluoroéthylène et d'hexafluoropropylène (EFEP), ou des polymère non fluorés comme le polysulfure de phénylène (PPS), le polynaphtalate de butylène (PBN). Ces polymères fluorés (PVDF, ETFE, EFEP) et non fluorés (PPS, PBN) seront préférentiellement fonctionnalisés.

Les couches adhésive (I) et barrière (II) des structures bicouches ou multicouche qui viennent d'être décrites présentent une excellente adhérence entre elles, adhérence qui n'est pas détériorée même par un séjour prolongé dans une essence comprenant des alcools (bio-essence).

En outre, cette couche barrière (II), dans ses trois variantes décrites ci-dessus, est très peu perméable aux liquides, et notamment aux carburants. Par conséquent, cette couche (II) se situe généralement à l'extrémité de la structure, en contact avec les liquides ou à un niveau sous-jacent d'une couche en contact avec les liquides.

Selon ce mode de réalisation particulier formé par la structure bicouche (I)/(II), la couche adhésive (I) peut présenter des propriétés endurantes. Elle peut alors constituer la couche externe ou support de la structure bicouche.

Selon un deuxième mode de réalisation de l'invention, la structure comprend au moins une troisième couche, dite couche endurante (III), la couche adhésive (I) selon l'invention étant disposée entre ladite couche endurante (III) et la couche barrière (II) et adhérant à leur zone de contact respective.

Ainsi, la structure multicouche peut être constituée de trois couches, dans l'ordre successif suivant :
- une couche endurante (III) comprenant les matériaux endurants tels que définis ci-dessous,
- une couche adhésive (I) comprenant la composition adhésive selon l'invention, et
- une couche barrière (II) comprenant les matériaux barrières tels que définis ci-dessus.

La couche endurante (III) peut être formée d'une composition comprenant du polyamide fortement carboné, c'est-à-dire dont le rapport du nombre d'atome de carbone sur le nombre d'atomes d'azote va de 10 à 18 comme explicité ci-avant. En effet, le polyamide fortement carboné offre de remarquables propriétés comme une remarquable longévité, notamment une remarquable résistance au vieillissement et à la dégradation dans des milieux agressifs, humides et oxydants, comme par exemple une résistance dans l'air chaud ou dans les produits chimiques chauds. Le polyamide fortement carboné possède une grande résistance au stress-cracking, au chlorure de zinc et aux produits chimiques en général. Le polyamide fortement carboné a également une bonne stabilité dimensionnelle dans des milieux d'humidité variable. Il est également résistant aux chocs.

De préférence, le polyamide fortement carboné est choisi parmi le PA11, le PA12, le PA10.10, le PA10.12, le PA12/10.T, PA10.10/10.T et leurs mélanges.

La couche endurante (III) comprenant le polyamide fortement carboné défini ci-dessus peut également être choisie pour constituer la couche support ou externe de la structure multicouche.

Sur la base de ces trois types de couches, endurante (III), adhésive (I) et barrière (II), il est possible d'élaborer de nombreuses structures pouvant comprendre jusqu'à 6 couches, à partir de couches supplémentaires barrières, adhésives ou endurantes.

Il est possible, selon un troisième mode de réalisation de l'invention, d'utiliser deux couches de matériaux barrières, comme par exemple une couche d'un copolymère d'éthylène et de vinylalcool (EVOH) et une couche d'un polyamide faiblement carboné associé à une polyoléfine particulière, l'association de ces deux couches barrières présentant des propriétés synergiques.

Selon un quatrième mode de réalisation de l'invention, la structure comprend, dans l'ordre :
- une troisième couche, dite couche endurante (III),
- la couche adhésive (I) comprenant la composition adhésive selon l'invention,
- une seconde couche, dite couche barrière (II),
- une quatrième couche (IV),
les couches adhérant entre elles par leur zone de contact respective.

De préférence, la structure peut comprendre les couches successives suivantes :
- une troisième couche endurante (III) formée d'une composition comprenant du polyamide C,
- la couche adhésive (I) comprenant la composition adhésive selon l'invention,
- une seconde couche barrière (II) formée d'une composition comprenant de l'EVOH, et
- une quatrième couche formée d'une composition comprenant du polyamide faiblement carboné.

La composition comprenant du polyamide faiblement carboné de la couche barrière (II) et/ou de la quatrième couche (IV) peut comprendre en outre au moins une polyoléfine, ou un mélange de polyoléfines, rigide(s) semi-cristalline(s), présentant un module de flexion, mesuré selon la norme ISO 178, supérieur à 300 MPa.

Ce type de structures présente l'avantage d'un effet barrière particulièrement élevé face à la bio-essence ayant des teneurs en éthanol minoritaires.

Il est également possible, selon un cinquième mode de réalisation de l'invention, de renforcer la partie externe de la structure en insérant, entre la couche adhésive (I) et la première couche endurante (III), une seconde couche endurante telle que définie ci-dessus, par exemple une couche endurante présentant une résistance aux chocs améliorée, ladite seconde couche endurante adhérant aux couches adjacentes sur leur zone de contact respective.

Par ailleurs, il s'avère que la couche adhésive (I) peut présenter également les propriétés d'un matériau barrière. Par conséquent, il est possible, selon un sixième mode de réalisation de l'invention, de la positionner à une extrémité de la structure et en contact des liquides, et ce
- au sein d'une structure bicouche en association avec une couche endurante,
- au sein d'une structure tri-couche, ou encore
- au sein d'une structure tétra-couche.

Selon un septième mode de réalisation de l'invention, il est également possible d'envisager la structure suivante comprenant les 5 couches successives suivantes :
- couche endurante (III),
- couche adhésive (I),
- couche barrière (II),
- couche adhésive (I),
- couche barrière (II),
les couches adhérant entre elles par leur zone de contact respective.

Selon un huitième mode de réalisation de l'invention, la couche endurante (III) peut également se retrouver à chacune des extrémités de la structure. Ces structures présentent une meilleure tenue au ZnCl₂ et aux milieux peroxydés (essence ou gazole ranci). Ces structures présentent également l'avantage d'avoir de meilleures performances en tenue choc. Par exemple, cette structure peut être une structure tri-couche, conduisant ainsi à des structures symétriques.

Selon un neuvième mode de réalisation de l'invention, il est possible de réaliser des structures symétriques, comprenant par exemple, la succession des couches suivantes :
- une couche endurante (III)
- une couche adhésive (I) selon l'invention,
- une couche barrière (II)
- une seconde couche adhésive (I)
- une seconde couche endurante (III).
les couches adhérant entre elles par leur zone de contact respective.

De préférence, la structure comprend les cinq couches successives suivantes :
- une couche endurante (III) formée d'une composition comprenant du polyamide fortement carboné,
- la couche adhésive notée (I),
- une couche barrière (II) formée d'une composition comprenant de l'EVOH,
- une autre couche adhésive (I), et
- une couche endurante (III) formée d'une composition comprenant du polyamide fortement carboné,
les couches adhérant entre elles par leur zone de contact respective.

L'épaisseur de la couche adhésive (I) est avantageusement va de 25 à 1000µm, et de préférence de 25 à 150µm, lorsqu'elle a une fonction de liant.

Les structures décrites ci-dessus peuvent se présenter sous la forme d'un tube, d'un récipient, d'un film ou d'une plaque.

Lorsque ces structures se présentent sous la forme d'un tube, elles peuvent être utilisées pour le transport et le stockage de fluides, notamment présents dans les véhicules, notamment pour le transport de liquides polaires et/ou apolaires, comme par exemple une huile, un liquide de frein, une solution d'urée, un liquide de refroidissement à base de glycol, des carburants, tels que des carburants polaires ou apolaires, de diesel, de bio-diesel, c'est-à-dire d'hydrocarbures apolaires et d'esters, en particulier d'essence, tout particulièrement de bio-essence, c'est-à-dire d'hydrocarbures apolaires et d'alcool tel que l'éthanol et le méthanol, et de l'air comprimé.

De telles structures sont particulièrement avantageuses pour le transport d'essence, de bio-essence, de bio-diesel et de liquide de refroidissement, classiquement à base de glycol, et de mélange d'urée et d'eau.

L'invention porte enfin sur un polyamide constitué des motifs suivants :
- un motif noté A présentant un nombre moyen d'atomes de carbone par atome d'azote noté C_{A} allant de 4 à 8,5, avantageusement de 4 à 7 ;
- un motif noté B présentant un nombre moyen d'atomes de carbone par atome d'azote noté C_{B} allant de 7 à 10, avantageusement de 7,5 à 9,5 ; et
- un motif noté C présentant un nombre moyen d'atomes de carbone par atome d'azote noté C_{C} allant de 9 à 18, avantageusement de 10 à 18 ;
- éventuellement au moins un motif Z différent d'un motif amide ;
un des motifs A, B ou C étant en proportion très majoritaire au sein du polyamide et représentant de 80% à 97% en poids par rapport au poids total du polyamide,
le nombre moyen d'atomes de carbone par atome d'azote des motifs A, B et C répondant en outre à l'inéquation stricte suivante : C_{A} < C_{B} < C_{C},
l'enthalpie de fusion du polyamide étant supérieure à 25J/g (DSC),
la température de fusion du polyamide étant supérieure à 150°C (DSC).
Les motifs A, B et C sont tels que définis ci-dessus.

De préférence, le polyamide selon l'invention est constitué d'un seul motif A, d'un seul motif B et d'un seul motif C.

De préférence, le motif B est le motif très majoritaire dans le polyamide selon l'invention.

Les exemples suivants servent à illustrer l'invention sans toutefois présenter un caractère limitatif.

### EXEMPLES

### 1/Lorsque la composition selon l'invention comprend un terpolyamide constitué des motifs A, B et C

### 1.1 Préparation des compositions

Les compositions selon l'invention figurant dans le tableau 1 ont été préparées à partir des composants suivants. Les quantités de produits sont exprimées % en poids par rapport au poids total de la composition.

PA 6/6.12/12 (6%/88%/6%). Désigne un copolyamide 6/6.12/12 de composition massique 6%/88%/6%, et de MFI à 235°C sous 5kg de 5, de température de fusion 188°C et d'enthalpie 55J/g.

PA 6/6.10/12 (6%/88%/6%). Désigne un copolyamide 6/6.10/12 de composition massique 6%/88%/6%, et de MFI à 235°C sous 5kg de 8, de température de fusion 189°C et d'enthalpie 53J/g.

PA 6/6.12/12 (85%/5%/10%). Désigne un copolyamide 6/6.12/12 de composition massique 85%/5%/10%, et de MFI à 235°C sous 5kg de 6, de température de fusion 189°C et d'enthalpie 55J/g.

PA 6/6.12/12/10.10. Désigne un copolyamide 6/6.12/12/10.10 de composition massique 6%/88%/3%/3%, et de MFI à 235°C sous 5kg de 6, de température de fusion 186°C et d'enthalpie 50J/g.

PA 6.T/6.12/12 (6%/88%/6%). Désigne un copolyamide 6.T/6.12/12 de composition massique 6%/88%/6% et de MFI à 235°C sous 5kg de 3.

Stabl. Désigne un mélange de stabilisants organiques constitué de 0.8% de phénol Lowinox 44B25 de la société Great Lakes et de 0.2% de phosphite Irgafos 168 de la société Ciba.

EPR1. Désigne un copolymère d'éthylène et de propylène à caractère élastomère fonctionnalisé par un groupe réactif à fonction anhydride (à 0.5-1% en masse), de MFI 9 (à 230°C, sous) 10kg, de type Exxellor VA1801 de la société Exxon utilisé en tant que modifiant choc. Son module de flexion est de 10 MPa environ selon la norme ISO178.

Plastifiant ou BBSA. Désigne le benzyl butyl sulfonamide (BBSA).

Les compositions comparatives figurant dans le tableau 2 ont été préparées à partir des composants suivants.

PA 6/6.10/12 (20%/20%/60%). Désigne un copolyamide 6/6.10/12 de composition massique 20%/20%/60%, et de MFI à 235°C sous 5kg de 5, de température de fusion 128°C et d'enthalpie 23J/g.

PA 6/6.10/12 (18%/58%/24%). Désigne un copolyamide 6/6.10/12 de composition massique 18%/58%/24% et de MFI à 235°C sous 5kg de 5, de température de fusion 144°C et d'enthalpie 42J/g.

PA 6/6.10/12 (60%/10%/30%). Désigne un copolyamide 6/6.10/12 de composition massique 60%/10%/30% et de MFI à 235°C sous 5kg de 6, de température de fusion 149°C et d'enthalpie 42J/g

### 1.2 Formulations des tubes

Ces compositions sont ensuite utilisées en tant que couche de liant d'un tube multicouche de diamètre extérieur 8mm et de diamètre intérieur de 6mm. Ces tubes d'épaisseur 1mm sont constitués de la façon suivante :
Couche extérieure de PA12-TL de 450µm // couche de liant de 50µm // couche intérieure de PA6a.

Les définitions de PA12-TL et de PA6a sont les suivantes :
PA6a. désigne une composition à base de polyamide 6 de Mn (masse moléculaire en nombre) 28000, contenant 10% de plastifiant BBSA (benzyl butyl sulfonamide), 12% d'EPR fonctionnalisé Exxelor VA1803 (société Exxon) et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba). La température de fusion de cette composition est de 215°C.

PA12-TL. désigne une composition à base de polyamide 12 de Mn (masse moléculaire en nombre) 35000, contenant 6% de plastifiant BBSA (benzyl butyl sulfonamide), et 6% d'EPR fonctionnalisé anhydride Exxelor VA1801 (société Exxon), et de 1.2% de stabilisants organiques constitués de 0.8% de phénol (Lowinox 44B25 de la société Great Lakes), de 0.2% de phosphite (Irgafos 168 de la société Ciba, de 0.2% d'anti-UV (Tinuvin 312 de la société Ciba). La température de fusion de cette composition est de 175°C.

### 1.3 Evaluation des tubes

Sur ces multicouches, l'adhésion a été mesurée avant et après immersion dans la bio-essence chaude.

### ADH1 correspond à la Mesure de la force d'adhérence exprimée en N/cm.

Elle se traduit par la mesure de la force de pelage, exprimée en N/cm, et mesurée sur le tube ayant subi un conditionnement de 15 jours à 50% d'humidité relative à 23°C. La valeur donnée concerne l'interface la plus faible, c'est-à-dire la moins adhérente du multicouche, là où il y a le plus grand risque de décollement. On effectue le pelage à l'interface en faisant subir à une des parties une traction sous un angle de 90° et à une vitesse de 50mm/mn.

TB = très bien, > 80
B = bien, entre 80 et > 60
AB = assez bien (acceptable), entre 60 et > 30
M = mauvais, entre 30 et 10
TM < 10 = très mauvais

### ADH2 correspond à la Mesure de la force d'adhérence après le test dans la bio-essence exprimée en N/cm

Même test que pour la mesure de ADH1 décrit ci-dessus, sauf que l'intérieur du tube est rempli par une bio-essence E50 à 80°C pendant 200h. La bio-essence E50 est un mélange comprenant en masse 50% d'éthanol, 44% d'essence L, 5% d'eau et 1% de Méthanol selon la norme B31 5220 de la société Peugeot SA, l'essence dite "L" étant de l'essence sans plomb de référence de la norme Euro, référencée sous le code E-H-003. Ces conditions de tests sont beaucoup plus sévères que les précédentes. Les critères d'appréciation en tiennent compte et sont :
B = bien, > 30
AB = assez bien (acceptable), > 20 à <= 30
M = mauvais, > 10 à <= 20
TM = très mauvais, <= 10

Les résultats figurent dans les tableaux 1 et 2 suivants.

Le tableau 1 comporte les compositions 1 à 6 selon l'invention.

**Tableau 1**

| | 11 | 12 | 13 | 14 | 15 | 16 |
|---|---|---|---|---|---|---|
| PA 6/6.12/12 (6%/88%/6%) | 100 | 89 | - | - | - | - |
| PA 6/6.10/12 (6%/88%/6%) | - | - | 89 | - | - | - |
| PA 6/6.10/12 (85%/5%/10%) | - | - | - | 89 | - | - |
| PA 6/6.12/12/10.10 (6%/88%/3%/3%) | - | - | - | - | - | 89 |
| PA 6.T/6.12/12 (6%/88%/6%) | - | - | - | - | 89 | - |
| EPR1 | - | 10 | - | - | 10 | 10 |
| Plastifiant BBSA | - | - | 10 | 10 | - | - |
| Stab1 | - | 1 | 1 | 1 | 1 | 1 |

| Evaluation de l'adhésion entre les couches extérieure (en PA12-TL) et intérieure (en PA6a) du tube multicouche | | | | | | |
|---|---|---|---|---|---|---|
| ADH1 | 58 | 65 | 61 | 33 | 61 | 66 |
| ADH2 | >30 | >30 | >30 | >30 | >30 | >30 |

Le tableau 2 comporte les compositions C1 à C3 comparatives.

**Tableau 2**

| | C1 | C2 | C3 |
|---|---|---|---|
| PA 6/6.10/12 (20%/20%/60%) | 89 | - | - |
| PA 6/6.10/12 (18%/58%/24%) | - | 89 | - |
| PA 6/6.10/12 (60%/10%/30%) | - | - | 89 |
| EPR1 | 10 | - | - |
| Plastifiant BBSA | - | 10 | 10 |
| Stab1 | 1 | 1 | 1 |

| Evaluation de l'adhésion entre les couches extérieure (en PA12-TL) et intérieure (en PA6a) du tube multicouche | | | |
|---|---|---|---|
| ADH1 | 47 | 44 | 45 |
| ADH2 | <10 | <10 | <10 |

Les compositions 1, 2, 3, 4, 5 et 6 conduisent à des résultats satisfaisants en termes d'adhésion entre la couche de PA12 et la couche de PA6, comparés aux résultats obtenus avec les compositions comparatives.

En effet, il a été observé que l'adhésion (notée ADH2) obtenu avec les compositions comparatives C1, C2 et C3 devient insuffisante après un contact à l'essence la bio-essence.

### 2/Lorsque la composition selon l'invention comprend un mélange de deux copolyamides constitués des motifs A, B et C

### 2.1 Préparation des compositions

Les compositions selon l'invention figurant dans le tableau 3 ont été préparées à partir des composants suivants. Les quantités de produits sont exprimées % en poids par rapport au poids total de la composition.

PA 6/6.12 (90%/10%). Désigne un copolyamide 6/6.12 de composition massique 90%/10%, et de MFI à 235°C sous 5kg de 7, de température de fusion 199°C et d'enthalpie 58J/g.

PA 6.12/12 (10%/90%). Désigne un copolyamide 6.12/12 de composition massique 10%/90%, et de MFI à 235°C sous 5kg de 7, de température de fusion 163°C et d'enthalpie 38J/g.

PA 6/6.12 (10%/90%). Désigne un copolyamide 6/6.12 de composition massique 10%/90%, et de MFI à 235°C sous 5kg de 5, de température de fusion 187°C et d'enthalpie 58J/g.

PA 6.12/12 (90%/10%). Désigne un copolyamide 6.12/12 de composition massique 90%/10%, et de MFI à 235°C sous 5kg de 6, de température de fusion 185°C et d'enthalpie 52J/g.

PA 10.T/10.10 (80/20%). Désigne un copolyamide 10.T/10.10 de composition massique 80/20%, et ayant une viscosité inhérente de 1.10, une température de fusion Tm de 292°C et une enthalpie de fusion de 49 J/g.

La composition comparative figurant dans le tableau 3 a été préparée à partir des composants suivants.

PA 6/6.12 (50%150%). Désigne un copolyamide 6/6.12 de composition massique 50%/50%, et de MFI à 235°C sous 5kg de 5, de température de fusion 148°C et d'enthalpie 24J/g.

PA 6.12/12 (50%150%). Désigne un copolyamide 6.12/12 de composition massique 50%/50%, et de MFI à 235°C sous 5kg de 4, de température de fusion 143°C et d'enthalpie 24J/g.

### 2.2 Formulations des tubes

Ces compositions sont ensuite utilisées en tant que couche de liant d'un tube multicouche de diamètre extérieur 8mm et de diamètre intérieur de 6mm, de manière strictement similaire au point 1.2.

### 2.3 Evaluation des tubes

Sur ces multicouches, l'adhésion a été mesurée avant et après immersion dans la bio-essence chaude, de manière strictement similaire au point 1.3.

Les compositions et résultats figurent dans le tableau 3 ci-dessous.

**Tableau 3**

| | 21 | 22 | 23 | 24 | 25 | C21 |
|---|---|---|---|---|---|---|
| PA 6/6.12 (90%/10%) | 44.5 | 50 | - | 50 | - | - |
| PA 6.12/12 (10%/90%) | 44.5 | 50 | - | - | - | - |
| PA 6/6.12 (10%/90%) | - | - | 50 | - | 60 | - |
| PA 6.12/12 (90%/10%) | - | - | 50 | 50 | - | - |
| PA 6/6.12 (50%/50%) | - | - | - | - | - | 50 |
| PA 10.T/10.10 (80%/20%) | - | - | - | - | 40 | - |
| PA 6.12/12 (50%/50%) | - | - | - | - | - | 50 |
| EPR1 | 10 | - | - | - | - | - |
| Stab1 | 1 | - | - | - | - | - |

| Evaluation de l'adhésion entre les couches extérieure (en PA12-TL) et intérieure (en PA6a) du tube multicouche | | | | | | |
|---|---|---|---|---|---|---|
| ADH1 | 71 | 80 | 68 | 38 | 37 | 73 |
| ADH2 | >30 | >30 | >30 | >30 | >30 | <10 |

Les compositions 21, 22, 23, 24 et 25 conduisent à des résultats satisfaisants en termes d'adhésion entre la couche de PA12 et la couche de PA6, comparés aux résultats obtenus avec la composition comparative C21.

En effet, il a été observé que l'adhésion (notée ADH2) obtenu avec la composition comparative C21 devient insuffisante après contact avec de l'essence la bio-essence chaude.

### 3/Lorsque la composition selon l'invention comprend un mélange d'un copolyamide et d'un homopolyamide constitués des motifs A, B et C

### 3.1 Préparation des compositions

Les compositions selon l'invention figurant dans le tableau 4 ont été préparées à partir des composants suivants. Les quantités de produits sont exprimées % en poids par rapport au poids total de la composition.

PA12. Désigne polyamide 12 de viscosité inhérente 1.65. Sa température de fusion est de 178°C et son enthalpie de fusion est de 54 kJ/kg.

PA6. désigne un Polyamide 6 de Mn (masse moléculaire en nombre) 28000. Sa température de fusion est de 220°C et son enthalpie de fusion est de 68 kJ/kg.

Les compositions comparatives figurant dans le tableau 5 ont été préparées à partir des composants suivants.

PA 6/12 (50%/50%). Désigne un copolyamide 6/12 de composition massique 50%/50%, et de MFI à 235°C sous 5kg de 4, de température de fusion 144°C et d'enthalpie 22J/g.

PA6.12. Désigne Polyamide 6.12 de Mn (masse moléculaire en nombre) 29000. Sa température de fusion est de 218°C et son enthalpie de fusion est de 67 kJ/kg.

### 3.2 Formulations des tubes

Ces compositions sont ensuite utilisées en tant que couche de liant d'un tube multicouche de diamètre extérieur 8mm et de diamètre intérieur de 6mm, de manière strictement similaire au point 1.2.

### 3.3 Evaluation des tubes

Sur ces multicouches, l'adhésion a été mesurée avant et après immersion dans la bio-essence chaude, de manière strictement similaire au point 1.3.

Les compositions selon l'invention et résultats figurent dans le tableau 4 ci-dessous.

**Tableau 4**

| | 31 | 32 | 33 | 34 |
|---|---|---|---|---|
| PA 6/6.12 (90%/10%) | 50 | 60 | - | - |
| PA 12 | 39 | 40 | - | 40 |
| PA 6 | - | - | 50 | - |
| PA 6.12/12 (10%/90%) | - | - | 50 | - |
| PA 6/6.12 (10%/90%) | - | - | - | 60 |
| EPR1 | 10 | - | - | - |
| Stab1 | 1 | - | - | - |

| Evaluation de l'adhésion entre les couches extérieure (en PA12-TL) et intérieure (en PA6a) du tube multicouche | | | | |
|---|---|---|---|---|
| ADH1 | 49 | 46 | 46 | 40 |
| ADH2 | >30 | >30 | >30 | >30 |

Les compositions comparatives et résultats figurent dans le tableau 5 ci-dessous.

**Tableau 5**

| | Sans liant | C31 | C32 |
|---|---|---|---|
| PA 12 | - | 40 | - |
| PA 6/12 (50%/50%) | - | 60 | 40 |
| PA6.12 | - | - | 60 |
| EPR1 | - | - | - |
| Stab1 | - | - | - |

| Evaluation de l'adhésion entre les couches extérieure (en PA12-TL) et intérieure (en PA6a) du tube multicouche | | | |
|---|---|---|---|
| ADH1 | <5 | 45 | 63 |
| ADH2 | <5 | <10 | <10 |

Les compositions 31, 32, 33 et 34 conduisent à des résultats satisfaisants en termes d'adhésion entre la couche de PA12 et la couche de PA6, comparés aux résultats obtenus avec les compositions comparatives.

En effet, il a été observé que l'adhésion (notée ADH2) devient insuffisante après contact avec de l'essence la bio-essence chaude

### 4/ Exemples comparatif divers

### 4.1 Préparation des compositions comparatives

Les compositions comparatives figurant dans le tableau 6 ont été préparées à partir des composants suivants. Les quantités de produits sont exprimées % en poids par rapport au poids total de la composition.

PA6.10 désigne un Polyamide 6.10 de Mn (masse moléculaire en nombre) 30000 et ayant un excédent de bout de chaîne amine NH2 par rapport au bout de chaîne COOH, la concentration en bout de chaîne NH2 étant de 45 µeq/g. Sa température de fusion est de 223°C et son enthalpie de fusion est de 61 kJ/kg.

Liant coPA. désigne une composition à base de 50% copolyamide 6/12 (de ratio 30/70 en masse) de Mn 16000, et de 50% copolyamide 6/12 (de ratio 70/30 en masse) de Mn 16000.

Liant PPg. désigne une composition à base de PP (polypropylène) greffé avec de l'anhydride maléique, connu sous le nom d'Admer QF551A de la société Mitsui.

Liant PA6.10 + PA6. désigne une composition à base de PA6.10 obtenu par polycondensation d'hexanediamine sur de l'acide décanedioïque (de Mn 30000, et tel que défini par ailleurs et de 36% de PA6 (de Mn 28000, et tel que défini par ailleurs) ; la moyenne pondérée massique des enthalpies est de 63,5J/g et la température de fusion du PA6 est de 220°C ; et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

Liant PA6.12 + PA6. désigne une composition à base de PA6.12 obtenu par polycondensation d'hexanediamine sur de l'acide dodécanedioïque (de Mn 29000, et tel que défini par ailleurs) et de 36% de PA6 (de Mn 28000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

Liant PA6.10 + PA12. désigne une composition à base de PA6.10 obtenu par polycondensation d'hexanediamine sur de l'acide décanedioïque (de Mn 30000, et tel que défini par ailleurs) et de 36% de PA12 (de Mn 35000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

Liant PA6 + PA12 + imod. Désigne une composition à base de 40% PA6 (de Mn 28000), de 40% de PA12 (de Mn) et de 20% d'EPR fonctionnalisé Exxelor VA1801 (société Exxon) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

PA6.12. Désigne Polyamide 6.12 obtenu par polycondensation d'hexanediamine sur de l'acide dodécanedioïque de Mn (masse moléculaire en nombre) 29000. Sa température de fusion est de 218°C et son enthalpie de fusion est de 67 kJ/kg.

### 4.2 Formulations des tubes

Ces compositions sont ensuite utilisées en tant que couche de liant d'un tube multicouche de diamètre extérieur 8mm et de diamètre intérieur de 6mm, de manière strictement similaire au point 1.2.

### 4.3 Evaluation des tubes

Sur ces multicouches, l'adhésion a été mesurée avant et après immersion dans la bio-essence chaude, de manière strictement similaire au point 1.3.

Les compositions comparatives et résultats figurent dans le tableau 6 ci-dessous.

**Tableau 6**

| | C41 | C42 | C43 | C44 | C45 | C46 | C47 |
|---|---|---|---|---|---|---|---|
| Liant coPA | 100 | - | - | - | - | - | - |
| Liant PPg | - | 100 | - | - | - | - | - |
| Liant PA6.10 + PA6 | - | - | 100 | - | - | - | - |
| Liant PA6.12 + PA6 | - | - | - | 100 | - | - | - |
| Liant PA6.10 + PA12 | - | - | - | - | 100 | - | - |
| Liant PA6 + PA12 + imod | - | - | - | - | - | 100 | - |
| PA6.12 | - | - | - | - | - | - | 100 |

| Evaluation de l'adhésion entre les couches extérieure (en PA12-TL) et intérieure (en PA6a) du tube multicouche | | | | | | | |
|---|---|---|---|---|---|---|---|
| ADH1 | >60 | >60 | 26 | 28 | 29 | 22 | 18 |
| ADH2 | <10 | <10 | 14 | 16 | 18 | 20 | 11 |

### 5/Utilisation des compositions comme liant d'autres types de structure multicouche à base de polyphtalamide

### 5.1 Préparation des compositions

Les compositions utilisées sont celles décrites ci-dessus.

### 5.2 Formulations des tubes

Ces compositions sont ensuite utilisées en tant que couche de liant d'un tube multicouche de diamètre extérieur 8mm et de diamètre intérieur de 6mm.

La structure multicouche de ces exemples est de nature suivante : couche extérieure de PA12-TL de 450µm // couche de liant de 50µm // couche intérieure de PPAb.

Le liant a ici pour but de procurer une adhésion entre la couche PA12 et la couche de polyphtalamide de type 6.T/6, ces dernières n'adhérent pas naturellement l'une sur l'autre.

PPAb. désigne une composition à base de polyphtalamide de type copolyamide 6.T/6 Ultramid TKR4351 de la société BASF, et de 25% d'EPR fonctionnalisé Exxelor VA1803 (société Exxon), et de 0.5% de stabilisant à base d'iodure de cuivre et de potassium de type Iodide P201 (société Ciba). La température de fusion de cette composition est de 295°C.

### 5.3 Evaluation des tubes

Sur ces multicouches, l'adhésion a été mesurée avant et après immersion dans la bio-essence chaude, de manière strictement similaire au point 1.3.

Les compositions selon l'invention et comparatives et les résultats figurent dans le tableau 7 ci-dessous.

**Tableau 7**

| | 11 | 12 | 21 | 31 | C11 |
|---|---|---|---|---|---|
| PA 6/6.12/12 (6%/88%/6%) | 100 | 89 | - | - | - |
| PA 6/6.12 (90%/10%) | - | - | 44.5 | 50 | - |
| PA 6.12/12 (10%/90%) | - | - | 44.5 | - | - |
| PA 12 | - | - | - | 39 | - |
| PA 6/6.10/12 (20%/20%/60%) | - | - | - | - | 89 |
| EPR1 | - | 10 | 10 | 10 | 10 |
| Stab1 | - | 1 | 1 | 1 | 1 |

| Evaluation de l'adhésion entre les couches extérieure (en PA12-TL) et intérieure (en polyphtalamide PPAb) du tube multicouche | | | | | |
|---|---|---|---|---|---|
| ADH1 | 55 | 68 | 65 | 51 | 49 |
| ADH2 | >30 | >30 | >30 | >30 | <10 |

On constate que l'on obtient également de bonnes valeurs d'adhésion entre la couche de PA12 et la couche de polyphtalamide de type PA6.T/6, notamment après exposition à la bio-essence, et cela contrairement aux exemples comparatifs.

### 6/Utilisation des compositions comme liant d'autres types de structure multicouche à base d'EVOH

### 6.1 Préparation des compositions

Les compositions utilisées sont celles décrites ci-dessus.

### 6.2 Formulations des tubes

Ces compositions sont ensuite utilisées en tant que couche de liant d'un tube multicouche de diamètre extérieur 8mm et de diamètre intérieur de 6mm. Les tubes sont réalisés par coextrusion des compositions à l'état fondu, c'est-à-dire au-delà de leur point de fusion.

La structure multicouche de ces exemples est maintenant est de la nature suivante : couche extérieure de PA12-TL de 425µm // couche de liant de 50µm // couche d'EVOH de 100µm // couche intérieure de PA6a de 425µm.

Le liant a ici pour but de procurer une adhésion entre la couche PA12 et la couche EVOH, ces dernières n'adhérent pas naturellement l'une sur l'autre.

EVOH désigne un copolymère d'éthylène vinyl alcool par exemple Soarnol DC3203RB de la société Nippon Gosei. La température de fusion de cette composition est de 183°C.

### 6.3 Evaluation des tubes

Sur ces multicouches, l'adhésion a été mesurée avant et après immersion dans la bio-essence chaude, de manière strictement similaire au point 1.3.

Les compositions selon l'invention et comparatives et les résultats figurent dans le tableau 8 ci-dessous.

| | 11 | 12 | 21 | 31 | C13 | C21 | C31 |
|---|---|---|---|---|---|---|---|
| PA 6/6.12/12 (6%/88%/6%) | 100 | 89 | - | - | - | - | - |
| PA 6/6.12 (90%/10%) | - | - | 44.5 | 50 | - | - | - |
| PA 6.12/12 (10%/90%) | - | - | 44.5 | - | - | - | - |
| PA 12 | - | - | - | 39 | - | - | 40 |
| PA 6/6.10/12 (60%/10%/30%) | - | - | - | - | 89 | - | - |
| PA 6/6.12 (50%/50%) | - | | - | - | - | 50 | - |
| PA 6.12/12 (50%/50%) | - | - | - | - | - | 50 | - |
| PA 6/12 | - | - | - | - | - | - | 60 |
| EPR1 | - | 10 | 10 | 10 | - | | - |
| BBSA | - | - | - | - | 10 | - | - |
| Stab1 | - | 1 | 1 | 1 | 1 | - | - |

| Evaluation de l'adhésion entre les couches extérieure (en PA12-TL) et la couche d'EVOH du tube multicouche | | | | | | | |
|---|---|---|---|---|---|---|---|
| ADH1 | 44 | 49 | 59 | 50 | 70 | 64 | 42 |
| ADH2 | >30 | >30 | >30 | >30 | <10 | <10 | <10 |

On constate que l'on obtient également de bonnes valeurs d'adhésion entre la couche de PA12 et la couche d'EVOH, notamment après exposition à la bio-essence, et cela contrairement aux exemples comparatifs.

### 7/Exemple de procédé de fabrication des structures multicouches : cas des tubes

Les tubes multicouches sont réalisés par coextrusion. On utilise une ligne industrielle d'extrusion multicouche McNeil, équipée de 5 extrudeuses, connectées à une tête d'extrusion multicouche à mandrins spiralés.

Les vis utilisées sont des monovis d'extrusion ayant des profils de vis adaptés aux polyamides. En plus, des 5 extrudeuses et de la tête d'extrusion multicouche, la ligne d'extrusion comporte :
- un ensemble filière-poinçon, situé en bout de tête de coextrusion ; le diamètre intérieur de la filière et le diamètre extérieur du poinçon sont choisis en fonction de la structure à réaliser et des matériaux qui la composent, ainsi que des dimensions du tube et de la vitesse de ligne ;
- un bac à vide avec un niveau de dépression réglable. Dans ce bac circule de l'eau maintenue à 20°C en général, dans laquelle est plongé un calibre permettant de conformer le tube dans ses dimensions finales. Le diamètre du calibre est adapté aux dimensions du tube à réaliser, typiquement de 8,5 à 10 mm pour un tube de diamètre externe de 8 mm et d'épaisseur de 1 mm ;
- une succession de bacs de refroidissement dans lesquels de l'eau est maintenue vers 20°C, permettant de refroidir le tube le long de parcours de la tête au banc de tirage ;
- un mesureur de diamètre ;
- un banc de tirage.

La configuration à 5 extrudeuses est utilisée pour réaliser les tubes allant de 2 couches à 5 couches. Dans le cas des structures dont le nombre de couches est inférieur à 5, plusieurs extrudeuses sont alors alimentées avec la même matière.

## Revendications

1. Composition adhésive comprenant majoritairement un ou deux polyamides constitué(s) des motifs choisis parmi :
- au moins un motif noté A présentant un nombre moyen d'atomes de carbone par atome d'azote noté C_{A} allant de 4 à 8,5;
- au moins un motif noté B présentant un nombre moyen d'atomes de carbone par atome d'azote noté C_{B} allant de 7 à 10;
- au moins un motif noté C présentant un nombre moyen d'atomes de carbone par atome d'azote noté C_{C} allant de 9 à 18 ; et
- éventuellement au moins un motif Z différent d'un motif amide ;
les trois motifs A, B et C étant présents au sein dudit polyamide ou ensemble au sein desdits polyamides ;
un des motifs A, B ou C étant en proportion très majoritaire au sein du ou des copolyamides et représentant de 80% à 97% en poids par rapport au poids total du copolyamide,
le nombre moyen d'atomes de carbone par atome d'azote des motifs A, B et C répondant en outre à l'inéquation stricte suivante : C_{A} < C_{B} < C_{C},
l'enthalpie de fusion du polyamide ou bien la moyenne pondérée massique des enthalpies de fusion du mélange de polyamides au sein de ladite composition étant supérieure à 25J/g mesurée par (̵DSC)̵ conformément à la norme ISO 11357,
la température de fusion du ou de chacun des polyamides étant supérieure à 150°C mesurée par DSC conformément à la norme ISO 11357.

2. Composition selon la revendication 1, **caractérisée en ce que** la différence entre les nombres moyens d'atomes de carbone par atome d'azote (C_{B}-C_{A}) et/ou (C_{C}-C_{B}) va de 1 à 4.

3. Composition selon la revendication 1 ou 2, **caractérisée en ce que** le ou les deux polyamides désignent un terpolyamide pouvant comprendre plus de trois motifs distincts, ces motifs étant nécessairement des motifs A, B et C, un homopolyamide combiné à un copolyamide ou encore deux copolyamides.

4. Composition selon la revendication 3, **caractérisée en ce que** le polyamide est un terpolyamide constitué des motifs A, B et C, tels que définis en revendication 1 ou 2.

5. Composition selon la revendication 3, **caractérisée en ce qu'**elle comprend le mélange de deux copolyamides différents constitués chacun de deux motifs choisis parmi les motifs A, B et C, tels que définis en revendication 1 ou 2.

6. Composition selon la revendication 3, **caractérisée en ce qu'**elle comprend le mélange d'un copolyamide constitué des deux des motifs choisis parmi les motifs A, B et C et d'un homopolyamide constitué du troisième motif A, B ou C, absent de la structure du copolyamide, les motifs A, B et C étant tels que définis en revendication 1 ou 2.

7. Composition selon la revendication 6, **caractérisée en ce que** la température de fusion de l'homopolyamide constitué de motif A est supérieure ou égale à 210°C et la température de fusion de l'homopolyamide constitué de motif C est inférieure à 200°C.

8. Composition selon l'une quelconque des revendications précédentes, **caractérisée en ce que**
le motif amide A est choisi parmi les motifs dérivés des monomères suivants : 6, 4.6, 6.6, 6.T, 9.T et 9'.T, 9' désignant la 2-méthyl-1,8-octanediamine, c'est à dire l'isomère de la diamine-9 ou 1,9-nonanediamine ;
le motif amide B est choisi parmi les motifs dérivés des monomères suivants : 6.10, 6.12, 9.T et 9'.T, et
le motif amide C est choisi parmi les motifs dérivés des monomères suivants : 10.10, 11, 12, 10.12, 6.18, 10.T, 12.T, 12/10.T, 12.12 et 10.10/10.T.

9. Composition selon la revendication précédente, **caractérisée en ce que**
le motif amide A est choisi parmi les motifs dérivés des monomères suivants : 6, 4.6 et 6.6 ;
le motif amide B est choisi parmi les motifs dérivés des monomères suivants : 6.10, 6.12 et
le motif amide C est choisi parmi les motifs dérivés des monomères suivants : 10.10, 11, 12, 10.12, 12.12 et 6.18.

10. Utilisation de la composition adhésive telle que définie à l'une quelconque des revendications précédentes pour la réalisation de structures destinées au transfert et/ou au stockage de fluide, en particulier d'un fluide choisi parmi une huile, un liquide de frein, un liquide de refroidissement, une solution d'urée, un hydrocarbure, un diesel, une essence, de l'air comprimé.

11. Structure comprenant au moins deux couches, l'une des deux couches, dite couche adhésive (I), étant formée d'une composition adhésive telle que définie à l'une quelconque des revendications 1 à 9.

12. Structure selon la revendication 11, **caractérisée en ce que** la seconde couche, dite couche barrière (II), est formée d'une composition comprenant au moins un polymère barrière aux bio-carburants, choisi parmi l'EVOH, un polyamide faiblement carboné, c'est-à-dire dont le rapport du nombre d'atomes de carbone sur le nombre d'atomes d'azote va de 4 à 7, et leur mélange.

13. Structure selon la revendication 11 ou 12, **caractérisée en ce que** la structure comprend au moins une troisième couche, dite couche endurante (III), formée d'une composition comprenant un polyamide choisi parmi le PA11, le PA12, le PA10.10, le PA10.12, le PA12/10.T, le PA10.10/10.T et leurs mélanges, la couche adhésive (I) étant disposée entre ladite couche endurante (III) et la couche barrière (II) et adhérant à leur zone de contact respective.

14. Structure selon l'une quelconque des revendications 11 à 13, **caractérisée en ce qu'**elle se présente sous la forme d'un tube, d'un récipient, d'un film ou d'une plaque.

15. Utilisation d'une structure telle que définie à l'une quelconque des revendications 11 à 14, notamment lorsqu'elle se présente sous la forme d'un tube, pour le transport et le stockage de fluides.

16. Utilisation selon la revendication 15, **caractérisée en ce que** le fluide est choisi parmi une huile, un liquide de frein, une solution d'urée, un liquide de refroidissement à base de glycol, des carburants.

17. Polyamide constitué des motifs suivants :
- au moins un motif noté A présentant un nombre moyen d'atomes de carbone par atome d'azote noté C_{A} allant de 4 à 8,5;
- au moins un motif noté B présentant un nombre moyen d'atomes de carbone par atome d'azote noté C_{B} allant de 7 à 10 et
- au moins un motif noté C présentant un nombre moyen d'atomes de carbone par atome d'azote noté C_{C} allant de 9 à 18;
- éventuellement au moins un motif Z différent d'un motif amide ;
un des motifs A, B ou C étant en proportion très majoritaire au sein du polyamide et représentant de 80% à 97% en poids par rapport au poids total du polyamide,
le nombre moyen d'atomes de carbone par atome d'azote des motifs A, B et C répondant en outre à l'inéquation stricte suivante : C_{A} < C_{B} < C_{C},
l'enthalpie de fusion du polyamide étant supérieure à 25J/g mesurée par DSC conformément à la norme ISO 11357,
la température de fusion du polyamides étant supérieure à 150°C mesurée par DSC conformément à la norme ISO 11357.

18. Polyamide selon la revendication 17, **caractérisé en ce qu'**il est constitué d'un seul motif A, d'un seul motif B et d'un seul motif C.

19. Polyamide selon la revendication 17 ou 18, **caractérisé en ce que** le motif B est le motif très majoritaire dans le polyamide.

## Patentansprüche

1. Klebstoffzusammensetzung, die überwiegend ein oder zwei Polyamide umfasst, bestehend aus Einheiten, die ausgewählt sind aus:
- mindestens einer mit A bezeichnete Einheit mit einer durchschnittlichen Anzahl von Kohlenstoffatomen pro Stickstoffatom mit der Bezeichnung C_{A} im Bereich von 4 bis 8,5;
- mindestens einer mit B bezeichnete Einheit mit einer durchschnittlichen Anzahl von Kohlenstoffatomen pro Stickstoffatom mit der Bezeichnung C_{B} im Bereich von 7 bis 10;
- mindestens einer mit C bezeichnete Einheit mit einer durchschnittlichen Anzahl von Kohlenstoffatomen pro Stickstoffatom mit der Bezeichnung C_{C} im Bereich von 9 bis 18; und
- optional mindestens einer Z-Einheit, die sich von einer Amid-Einheit unterscheidet;
wobei die drei Einheiten A, B und C innerhalb des Polyamids oder zusammen innerhalb der Polyamide vorhanden sind;
wobei eine der Einheiten A, B oder C zu einem sehr großen Anteil innerhalb des Copolyamids oder der Copolyamide vorliegt und 80 bis 97 Gew.-% des Gesamtgewichts des Copolyamids ausmacht,
wobei die durchschnittliche Anzahl von Kohlenstoffatomen pro Stickstoffatom der Einheiten A, B und C auch die folgende strikte Ungleichung erfüllt: C_{A} < C_{B} < C_{C},
wobei die Schmelzenthalpie des Polyamids oder das massengewichtete Mittel der Schmelzenthalpien der Polyamidmischung in der Zusammensetzung größer als 25 J/g ist, gemessen mit DSC nach der Norm ISO 11357,
wobei die Schmelztemperatur des Polyamids oder jedes der Polyamide größer als 150 °C ist, gemessen mit DSC nach der Norm ISO 11357.

2. Zusammensetzung nach Anspruch 1, **dadurch gekennzeichnet, dass** die Differenz zwischen den durchschnittlichen Kohlenstoffatomzahlen pro Stickstoffatom (C_{B}-C_{A}) und/oder (C_{C}-C_{B}) zwischen 1 und 4 liegt.

3. Zusammensetzung nach Anspruch 1 oder 2, **dadurch gekennzeichnet, dass** das eine oder beide Polyamide ein Terpolyamid bezeichnen, das mehr als drei verschiedene Einheiten umfassen kann, wobei diese Einheiten notwendigerweise die Einheiten A, B und C, ein Homopolyamid in Kombination mit einem Copolyamid oder zwei Copolyamiden sind.

4. Zusammensetzung nach Anspruch 3, **dadurch gekennzeichnet, dass** das Polyamid ein Terpolyamid ist, das aus den Einheiten A, B und C besteht, wie in Anspruch 1 oder 2 definiert.

5. Zusammensetzung nach Anspruch 3, **dadurch gekennzeichnet, dass** sie die Mischung aus zwei verschiedenen Copolyamiden umfasst, die jeweils aus zwei Einheiten bestehen, ausgewählt aus den Einheiten A, B und C, wie in Anspruch 1 oder 2 definiert.

6. Zusammensetzung nach Anspruch 3, **dadurch gekennzeichnet, dass** sie die Mischung eines Copolyamids, bestehend aus zwei der Einheiten, ausgewählt aus den Einheiten A, B und C, und eines Homopolyamids, bestehend aus der dritten Einheit A, B oder C, die in der Struktur des Copolyamids nicht vorhanden ist, umfasst, wobei die Einheiten A, B und C wie in Anspruch 1 oder 2 definiert sind.

7. Zusammensetzung nach Anspruch 6, **dadurch gekennzeichnet, dass** die Schmelztemperatur des aus Einheit A bestehenden Homopolyamids größer oder gleich 210 °C ist und die Schmelztemperatur des aus Einheit C bestehenden Homopolyamids unter 200 °C liegt.

8. Zusammensetzung nach einem der vorhergehenden Ansprüche, **dadurch gekennzeichnet, dass**
die Amideinheit A aus den Einheiten ausgewählt ist, die von folgenden Monomeren abgeleitet sind: 6, 4.6, 6.6, 6.T, 9.T und 9'.T, wobei 9' 2-Methyl-1,8-octanediamin bezeichnet, d. h. das Isomer von Diamin-9 oder 1,9-Nonandiamin;
die Amideinheit B aus den Einheiten ausgewählt ist, die von folgenden Monomeren abgeleitet sind: 6,10, 6,12, 9.T und 9'.T; und
die Amideinheit C aus den Einheiten ausgewählt ist, die von folgenden Monomeren abgeleitet sind: 10.10, 11.12, 10.12, 6.18, 10.T, 12.T, 12/10.T, 12.12 und 10.10/10.T.

9. Zusammensetzung nach dem vorhergehenden Anspruch, **dadurch gekennzeichnet, dass**
die Amideinheit A aus den Einheiten ausgewählt ist, die von folgenden Monomeren abgeleitet sind: 6, 4.6 und 6.6;
die Amideinheit B aus den Einheiten ausgewählt ist, die von folgenden Monomeren abgeleitet sind: 6.10, 6.12 und
die Amideinheit C aus den Einheiten ausgewählt ist, die von folgenden Monomeren abgeleitet sind: 10.10, 11, 12, 10.12, 12.12 und 6.18.

10. Verwendung der Klebstoffzusammensetzung nach einem der vorhergehenden Ansprüche zur Herstellung von Strukturen, die zur Übertragung und/oder Lagerung von Flüssigkeit bestimmt sind, insbesondere einer Flüssigkeit, ausgewählt aus einem Öl, einer Bremsflüssigkeit, einer Kühlflüssigkeit, einer Harnstofflösung, einem Kohlenwasserstoff, einem Diesel, einem Benzin, Druckluft.

11. Struktur, die mindestens zwei Schichten umfasst, wobei eine der beiden Schichten, die als Klebeschicht (I) bezeichnet wird, aus einer Klebstoffzusammensetzung gebildet ist, wie in einem der Ansprüche 1 bis 9 definiert.

12. Struktur nach Anspruch 11, **dadurch gekennzeichnet, dass** die zweite Schicht, die so genannte Sperrschicht (II), aus einer Zusammensetzung gebildet ist, die mindestens ein Sperrpolymer für Biokraftstoffe umfasst, ausgewählt aus EVOH, einem kohlenstoffarmen Polyamid, d. h. bei dem das Verhältnis der Anzahl von Kohlenstoffatomen zur Anzahl von Stickstoffatomen 4 bis 7 beträgt, und deren Mischung.

13. Struktur nach Anspruch 11 oder 12, **dadurch gekennzeichnet, dass** die Struktur mindestens eine dritte Schicht umfasst, die so genannte dauerhafte Schicht (III), gebildet aus einer Zusammensetzung, die ein Polyamid umfasst, ausgewählt aus PA11, PA12, PA10.10. PA10.12, PA12/10.T, PA10.10/10.T und Mischungen davon, wobei die Klebeschicht (I) zwischen der dauerhaften Schicht (III) und der Sperrschicht (II) angeordnet ist und an deren jeweiliger Kontaktzone haftet.

14. Struktur nach einem der Ansprüche 11 bis 13, **dadurch gekennzeichnet, dass** sie die Form einer Röhre, eines Behälters, einer Folie oder einer Platte hat.

15. Verwendung einer Struktur nach einem der Ansprüche 11 bis 14, insbesondere wenn sie in Röhrenform vorliegt, für den Transport und die Lagerung von Flüssigkeiten.

16. Verwendung nach Anspruch 15, **dadurch gekennzeichnet, dass** die Flüssigkeit ausgewählt ist aus einem Öl, einer Bremsflüssigkeit, einer Harnstofflösung, einem Kühlmittel auf Glykolbasis und Kraftstoffen.

17. Polyamid, bestehend aus folgenden Einheiten:
- mindestens einer mit A bezeichnete Einheit mit einer durchschnittlichen Anzahl von Kohlenstoffatomen pro Stickstoffatom mit der Bezeichnung C_{A} im Bereich von 4 bis 8,5;
- mindestens einer mit B bezeichnete Einheit mit einer durchschnittlichen Anzahl von Kohlenstoffatomen pro Stickstoffatom mit der Bezeichnung C_{B} im Bereich von 7 bis 10; und
- mindestens einer mit C bezeichnete Einheit mit einer durchschnittlichen Anzahl von Kohlenstoffatomen pro Stickstoffatom mit der Bezeichnung C_{C} im Bereich von 9 bis 18;
- optional mindestens einer Z-Einheit, die sich von einer Amid-Einheit unterscheidet;
wobei eine der Einheiten A, B oder C zu einem sehr großen Anteil innerhalb des Polyamids vorliegt und 80 bis 97 Gew.-% des Gesamtgewichts des Polyamids ausmacht,
wobei die durchschnittliche Anzahl von Kohlenstoffatomen pro Stickstoffatom der Einheiten A, B und C auch die folgende strikte Ungleichung erfüllt: C_{A} < C_{B} < C_{C},
wobei die Schmelzenthalpie des Polyamids größer als 25 J/g ist, gemessen mit DSC nach der Norm ISO 11357.
wobei die Schmelztemperatur des Polyamids größer als 150 °C ist, gemessen mit DSC nach der Norm ISO 11357.

18. Polyamid nach Anspruch 17, **dadurch gekennzeichnet, dass** es aus einer einzelnen Einheit A, einer einzelnen Einheit B und einer einzelnen Einheit C besteht.

19. Polyamid nach Anspruch 17 oder 18, **dadurch gekennzeichnet, dass** die Einheit B die sehr vorherrschende Einheit in dem Polyamid ist.

## Claims

1. An adhesive composition predominantly comprising one or two polyamides consisting of units chosen from:
- at least one unit denoted A with a mean number of carbon atoms per nitrogen atom, denoted C_{A}, ranging from 4 to 8.5,
- at least one unit denoted B with a mean number of carbon atoms per nitrogen atom, denoted C_{B}, ranging from 7 to 10,
- at least one unit denoted C with a mean number of carbon atoms per nitrogen atom, denoted Cc, ranging from 9 to 18, and
- optionally at least one unit Z other than an amide unit;
the three units A, B and C being present in said polyamide or together in said polyamides;
one of the units A, B or C being in a very predominant proportion in the copolyamide(s) and representing from 80% to 97% by weight relative to the total weight of the copolyamide,
the mean number of carbon atoms per nitrogen atom of the units A, B and C also corresponding to the following strict inequality: C_{A} < C_{B} < C_{C},
the heat of fusion of the polyamide or the mass-weighted mean of the heats of fusion of the mixture of polyamides in said composition being greater than 25 J/g measured by DSC in accordance with standard ISO 11357,
the melting point of the or of each of the polyamides being greater than 150°C measured by DSC in accordance with standard ISO 11357.

2. The composition as claimed in claim 1, **characterized in that** the difference between mean numbers of carbon atoms per nitrogen atom (C_{B}-C_{A}) and/or (C_{C}-C_{B}) ranges from 1 to 4.

3. The composition as claimed in claim 1 or 2, **characterized in that** the polyamide or the two polyamides denote(s) a terpolyamide, comprising more than three different units, but these units necessarily being units A, B and C, a homopolyamide combined with a copolyamide or two copolyamides.

4. The composition as claimed in claim 3, **characterized in that** the polyamide is a terpolyamide consisting of units A, B and C as defined in claim 1 or 2.

5. The composition as claimed in claim 3, **characterized in that** it comprises a mixture of two different copolyamides each consisting of two units chosen from units A, B and C as defined in claim 1 or 2.

6. The composition as claimed in claim 3, **characterized in that** it comprises a mixture of a copolyamide consisting of two units chosen from units A, B and C and of a homopolyamide consisting of the third unit A, B or C, which is absent from the structure of the copolyamide, units A, B and C being as defined in claim 1 or 2.

7. The composition as claimed in claim 6, **characterized in that** the melting point of the homopolyamide consisting of unit A is greater than or equal to 210°C and the melting point of the homopolyamide consisting of unit C is less than 200°C.

8. The composition as claimed in any one of the preceding claims, **characterized in that**
the amide unit A is chosen from units derived from the following monomers: 6, 4.6, 6.6, 6.T, 9.T and 9'.T, 9' denoting 2-methyl-1,8-octanediamine, i.e. the isomer of diamine-9 or 1,9-nonanediamine;
the amide unit B is chosen from units derived from the following monomers: 6.10, 6.12, 9.T and 9'.T, and
the amide unit C is chosen from units derived from the following monomers: 10.10, 11, 12, 10.12, 6.18, 10.T, 12.T, 12/10.T, 12.12 and 10.10/10.T.

9. The composition as claimed in the preceding claim, **characterized in that**
the amide unit A is chosen from units derived from the following monomers: 6, 4.6 and 6.6;
the amide unit B is chosen from units derived from the following monomers: 6.10, 6.12, and
the amide unit C is chosen from units derived from the following monomers: 10.10, 11, 12, 10.12, 12.12 and 6.18.

10. The use of the adhesive composition as defined in any one of the preceding claims for making structures for transferring and/or storing fluid, in particular a fluid chosen from an oil, a brake liquid, a cooling liquid, a urea solution, a hydrocarbon, a diesel, a gasoline, compressed air.

11. A structure comprising at least two layers, one of the two layers, referred to as the adhesive layer (I), being formed from an adhesive composition as defined in any one of claims 1 to 9.

12. The structure as claimed in claim 11, **characterized in that** the second layer, referred to as the barrier layer (II), is formed from a composition comprising at least one polymer that is a barrier to biofuels, chosen from EVOH, a weakly-carbonic polyamide, i.e. in which the ratio of the number of carbon atoms to the number of nitrogen atoms ranges from 4 to 7, and a mixture thereof.

13. The structure as claimed in claim 11 or 12, **characterized in that** the structure comprises at least a third layer, referred to as the long-lasting layer (III), formed from a composition comprising a polyamide chosen from PA11, PA12, PA10.10, PA10.12, PA12/10.T, PA10.10/10.T and mixtures thereof, the adhesive layer (I) being arranged between said long-lasting layer (III) and the barrier layer (II) and adhering to the respective zone of contact thereof.

14. The structure as claimed in any one of claims 11 to 13, **characterized in that** it is in the form of a pipe, a container, a film or a plate.

15. The use of a structure as defined in any one of claims 11 to 14, especially when it is in the form of a pipe, for transporting and storing fluids.

16. The use as claimed in claim 15, **characterized in that** the fluid is chosen from an oil, a brake liquid, a urea solution, a glycol-based cooling liquid and fuels.

17. A polyamide consisting of the following units:
- at least one unit denoted A with a mean number of carbon atoms per nitrogen atom, denoted C_{A}, ranging from 4 to 8.5,
- at least one unit denoted B with a mean number of carbon atoms per nitrogen atom, denoted C_{B}, ranging from 7 to 10, and
- at least one unit denoted C with a mean number of carbon atoms per nitrogen atom, denoted Cc, ranging from 9 to 18,
- optionally at least one unit Z other than an amide unit;
one of the units A, B or C being in very predominant proportion in the polyamide and representing from 80% to 97% by weight relative to the total weight of the polyamide,
the mean number of carbon atoms per nitrogen atom of the units A, B and C also corresponding to the following strict inequality: C_{A} < C_{B} < C_{C},
the heat of fusion of the polyamide being greater than 25 J/g measured by DSC in accordance with standard ISO 11357,
the heat of fusion of the polyamide being greater than 150°C measured by DSC in accordance with standard ISO 11357.

18. The polyamide as claimed in claim 17, **characterized in that** it consists of only one unit A, only one unit B and only one unit C.

19. The polyamide as claimed in claim 17 or 18, **characterized in that** unit B is the very predominant unit in the polyamide.
